# EUROPEAN PATENT APPLICATION

(11) **EP 4 488 012 A1**
(43) Date of publication of application: **08.01.2025**
(21) Application number: 24185330.8
(22) Date of filing: 28.06.2024
(51) Int. Cl.: B25J 9/16

(54) **ROBOTIC SYSTEM AND METHOD WITH OBJECT DETECTION**

(30) Priority: 02.07.2023 US 202363524668 P
(71) Applicant: Mujin, Inc., Tokyo 1350053 (JP)
(72) Inventor: Gaisser, Floris, Tokyo 135-0053 (JP)
(74) Representative: Hofstetter, Schurack & Partner

(57) **Abstract**

A computing system including a processor configured to identify a contour of a stack of objects based on 3D image information obtained, identify a top surface of the stack of objects based on the contour of the stack of obj ects, detect extension lines, each corresponding to an edge of an object or a gap between objects, extending from a perimeter towards a center of the top surface based on 2D image information of the top surface of the stack of objects, detect a presence of the layer divider based on a length of each of the extension lines being less than a line-length threshold, identify a contour of the layer divider according to points on the top surface corresponding to termination points of the extension lines, and determine a trajectory to control a movement of a robot based on the contour.

## Description

### Cross-Reference to Related Application(s)

The present application claims the benefit of U.S. Provisional Appl. No. 63/524,668, entitled "ROBOTIC SYSTEM WITH OBJECT DETECTION" and filed July 2, 2023, the entire contents of which are incorporated by reference herein.

### Field

The present technology is directed generally to robotic systems and, more specifically, to systems, processes, and techniques for identification and detection of objects. More particularly, the present technology enables identification and detection of layer separators disposed between layers of objects arranged on a loading or a transportation platform.

### Background

With their ever-increasing performance and lowering cost, many robots (e.g., machines configured to automatically/autonomously execute physical actions) are now extensively used in various different fields. Robots, for example, can be used to execute various tasks (e.g., manipulate or transfer an object through space) in manufacturing and/or assembly, packing and/or packaging, transport and/or shipping, etc. In executing the tasks, robots can replicate human actions, thereby replacing or reducing human involvements that are otherwise required to perform dangerous or repetitive tasks.

Despite technological advancements, robots often lack the sophistication to duplicate human interactions for executing larger and/or more complex tasks. Accordingly, there remains a need for improved techniques and systems for managing operations and/or interactions between robots.

### Brief Summary

In some aspects, there is provided a computing system to detect a layer divider between a stack of objects, including a control system configured to communicate with a robot having at least one camera and a robot arm that includes an end effector apparatus; and a processing circuit configured to identify at least one edge and a contour of the stack of objects based on 3D image information obtained from at least one image captured by the at least one camera, identify a top surface of the stack of objects based on the contour and the at least one edge of the stack of objects, detect extension lines, each corresponding to at least one of an edge of an object or a gap between objects of the stack of objects, extending from a perimeter of the top surface towards a center of the top surface based on 2D image information of the top surface of the stack of objects, detect a presence of the layer divider based on a length of each of the extension lines being less than a line-length threshold, identify a contour of the layer divider according to points on the top surface corresponding to termination points of the extension lines, and determine a trajectory to control a movement of the robot arm based on the contour of the layer divider.

In some aspects, there is provided a computing system to detect a layer divider between a stack of objects, including a control system configured to communicate with a robot having at least one camera and a robot arm that includes an end effector apparatus, and a processing circuit configured to identify at least one edge and a contour of the stack of objects based on 3D image information obtained from at least one image captured by the at least one camera, identify a top surface of the stack of objects based on the contour and the at least one edge of the stack of objects, detect extension lines, each corresponding to at least one of an edge of an object or a gap between objects of the stack of objects, extending from a perimeter of the top surface towards a center of the top surface based on 2D image information of the top surface of the stack of objects, and detect a presence of the layer divider, in response to a length of each of the extension lines being less than a line-length threshold.

In some aspects, there is provided a computer processor-implemented method for detecting a layer divider between a stack of objects, including identifying at least one edge and a contour of the stack of objects based on 3D image information obtained from at least one image captured by at least one camera, identifying a top surface of the stack of objects based on the contour and the at least one edge of the stack of objects, detecting extension lines, each corresponding to at least one of an edge of an object or a gap between objects of the stack of objects, extending from a perimeter of the top surface towards a center of the top surface based on 2D image information of the top surface of the stack of objects, detecting a presence of the layer divider based on a length of each of the extension lines being less than a line-length threshold, identifying a contour of the layer divider according to points on the top surface corresponding to termination points of the extension lines, and identifying a trajectory to control a movement of a robot arm of a robot based on the contour of the layer divider.

Other features and aspects will be apparent from the following detailed description, the drawings, and the claims.

### Brief Description of the Figures

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.
FIG. 1A illustrates an example of a system for detection, identification, and retrieval of objects, according to one or more embodiments.
FIG. 1B illustrates an example of a system for detection, identification, and retrieval of objects, according to one or more embodiments.
FIG. 1C illustrates an example of a system for detection, identification, and retrieval of objects, according to one or more embodiments.
FIG. 1D illustrates an example of a system for detection, identification, and retrieval of objects, according to one or more embodiments.
FIG. 2A illustrates an example of a computing system configured to detect, identify, and retrieve objects, according to one or more embodiments.
FIG. 2B illustrates an example of a computing system configured to detect, identify, and retrieve objects, according to one or more embodiments.
FIG. 2C illustrates an example of a computing system configured to detect, identify, and retrieve objects, according to one or more embodiments.
FIG. 2D illustrates an example of a computing system configured to detect, identify, and retrieve objects, according to one or more embodiments.
FIG. 2E illustrates an example of image information processed by systems and methods disclosed herein, according to one or more embodiments.
FIG. 2F is an example of image information processed by systems and methods disclosed herein according to one or more embodiments.
FIG. 3A illustrates an example of an environment for operating a robotic system, according to one or more embodiments.
FIG. 3B illustrates an example of an environment for the detection, identification, and retrieval of objects by a robotic system, according to one or more embodiments.
FIG. 4A illustrates an example of a method for detection, identification, and retrieval of a layer divider by a robotic system, according to one or more embodiments.
FIG. 4B illustrates an example of a method for determining a top surface of a stack of objects by a robotic system, according to one or more embodiments.
FIG. 5A illustrates an example of an image of a stack of objects and a layer divider, according to one or more embodiments.
FIG. 5B illustrates an example of an image of a stack of objects and a layer divider, according to one or more embodiments.
FIG. 5C illustrates an example of an image of a stack of objects and a layer divider, according to one or more embodiments.
FIG. 6A illustrates an example of a method for determining a contour of the layer divider in a stack of objects, according to one or more embodiments.
FIG. 6B illustrates an example of images for determining a layer divider, according to one or more embodiments.
FIG. 7 illustrates an example of a method for validating a presence of a layer divider, according to one or more embodiments.
FIG. 8 illustrates an example of an environment where two layers of objects are stacked on a pallet, according to one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### Detailed Description

Systems and methods related to object detection, identification, and retrieval are described herein. In some examples, the disclosed systems and methods may facilitate detection, identification, and retrieval of layer dividers that are disposed between layers of objects arranged on a loading or a transportation platform. As discussed herein, the objects may be boxes, bins, crates, etc., which are arranged on a loading or a transportation platform such as, for example, a skid or a pallet. In the detailed description below, the terms loading or transportation platform and pallet may be used interchangeably, and these terms may refer to any platform on which objects may be stacked for storage or transportation.

In some examples, the shapes and sizes of the objects may be varied. In some examples, the shapes of the objects may generally be rectangular prism or cuboid. The objects may be arranged on the loading or transportation platform in an organized, unorganized, or irregular fashion. For example, the objects that are arranged on the loading or the transportation platform may be arranged in shapes such as, for example, rectangular prism, rectangular pyramid, or cuboid. In other examples, the objects may be arranged on the loading or the transportation platform in layers, and each of the layers may or may not have similar or equal number or objects.

Objects in a layer may be separated from objects in another layer by a splitter sheet, layer separator, or a layer divider. The layer separator or layer divider may separate layers of objects on the loading or the transportation platform, and may disperse weight, protect products from dust and dirt, and help protect against strapping and forklift damage to the one or more objects. In some examples, the layer divider may be a thin layer that is disposed between the objects such as, for example, a slip sheet, a splitter sheet, a cardboard sheet, a corrugated fiberboard, a paper board (solid sheet), a corrugated sheet, cardstock, a sheet of paper, a plastic sheet, or a layer pad that may be placed between layers of objects. In some examples, a thickness of the layer divider may be minimal, e.g., less than 10%, less than 5%, less than 2%, or less than 1%, when compared to a dimension of any of the objects or a length or a breadth of the layer divider. Some examples of the thickness of the layer divider are: the thickness of the corrugated fiberboard may vary from 3 mm to 15 mm depending on whether the corrugated fiberboard is single walled, double walled or triple walled, the thickness of the paper board may vary from 0.2mm to 1mm, and the thickness of the cardstock may vary from 0.25mm to 0.8mm.

In some examples, the layer divider may be disposed between some or all the layers of objects on the loading or the transportation platform. In some examples, the layer divider may be sized to cover all, almost all or substantially all (e.g., more than 50%, more than 80%, more than 90%, more than 95%, or more than 98%) of a top surface of a layer of the objects. In some examples, a length and breadth of the layer divider may be smaller than a corresponding length and breadth of a top surface of the layer of objects on which it is disposed. In some examples, the layer divider may be substantially quadrilateral in shapes, such as a rectangular shape or a square shape. In some examples, a shape of a layer divider may be distorted due to folding, bending, or tearing of one or more edges or sides of the layer divider.

Detection and identification of the layer dividers in such circumstances may be challenging due to the irregular arrangement and shape of the layer divider. The systems and methods discussed herein improve object detection, identification, and retrieval of layer dividers that come in disparate shapes and are arranged in a regular or semi-regular fashion. Accordingly, systems and methods described herein are designed to detect a presence of the layer divider and to identify a contour of the layer divider. The systems and methods discussed herein may include robotic systems. Robotic systems configured in accordance with embodiments hereof may autonomously execute integrated tasks by coordinating operations of multiple robots. Robotic systems, as described herein, may include any suitable combination of robotic devices, actuators, sensors, cameras, and computing systems configured to control, issue commands, receive information from robotic devices and sensors, access, analyze, and process data generated by robotic devices, sensors, and camera, generate data or information usable in the control of robotic systems, and plan actions for robotic devices, sensors, and cameras. As used herein, robotic systems are not required to have immediate access or control of robotic actuators, sensors, or other devices. Robotic systems, as described here, may be computational systems configured to improve the performance of such robotic actuators, sensors, and other devices through reception, analysis, and processing of information.

The technology described herein provides technical improvements to a robotic system configured for use in object identification, detection, and retrieval. Technical improvements described herein increase the speed, precision, and accuracy of these tasks and further facilitates the detection, identification, and retrieval of a layer separator disposed between layers of objects on a loading or a transportation platform. The robotic systems and computational systems described herein address the technical problem of identifying, detecting, and retrieving layer separators disposed between layers of objects on a loading or a transportation platform. By addressing this technical problem, the technology of object identification, detection, and retrieval is improved.

The present application refers to systems and robotic systems. Robotic systems, as discussed herein, may include robotic actuator components (e.g., robotic arms, robotic grippers, etc.), various sensors (e.g., cameras, etc.), and various computing or control systems. As discussed herein, computing systems or control systems may be referred to as "controlling" various robotic components, such as robotic arms, robotic grippers, cameras, etc. Such "control" may refer to direct control of and interaction with the various actuators, sensors, and other functional aspects of the robotic components. For example, a computing system may control a robotic arm by issuing or providing all of the required signals to cause the various motors, actuators, and sensors to cause robotic movement. Such "control" may also refer to the issuance of abstract or indirect commands to a further robotic control system that then translates such commands into the necessary signals for causing robotic movement. For example, a computing system may control a robotic arm by issuing a command describing a trajectory or destination location to which the robotic arm should move to and a further robotic control system associated with the robotic arm may receive and interpret such a command and then provide the necessary direct signals to the various actuators and sensors of the robotic arm to cause the required movement.

In particular, the present technology described herein assists a robotic system to detect, identify, interact with a layer separator, which is disposed between layers of objects arranged on the loading or a transportation platform. Detection, identification, and retrieval of a layer separator from between layers of objects requires several steps, including identifying an edge and a contour of the stack of objects disposed on the loading or the transportation platform, identifying a top surface of the stack of objects based on the contour and the edge of the stack of objects, detecting extension lines corresponding to an edge of an object or a gap between objects of the stack of objects, the extension lines extending from a perimeter of the top surface towards a center of the top surface of the stack of objects, detecting a presence of the layer divider based on a length of each of the extension lines being less than a threshold, and identifying a contour of the layer divider according to points on the top surface corresponding to termination points of the extension lines. For example, because of the potential for irregular arrangement and shape of the layer divider, the contours of the layer divider may need to be recognized and identified.

In the following description, specific details are set forth to provide an understanding of the presently disclosed technology. In embodiments, the techniques introduced here may be practiced without including each specific detail disclosed herein. In other instances, well-known features, such as specific functions or routines, are not described in detail to avoid unnecessarily obscuring the present disclosure. References in this description to "an example," "an embodiment," "one embodiment," or the like mean that a particular feature, structure, material, or characteristic being described is included in at least one embodiment of the present disclosure. Thus, the appearances of such phrases in this specification do not necessarily all refer to the same embodiment. On the other hand, such references are not necessarily mutually exclusive either. Furthermore, the particular features, structures, materials, or characteristics described with respect to any one embodiment can be combined in any suitable manner with those of any other embodiment, unless such items are mutually exclusive. It is to be understood that the various embodiments shown in the figures are merely illustrative representations and are not necessarily drawn to scale.

Several details describing structures or processes that are well-known and often associated with robotic systems and subsystems, but that can unnecessarily obscure some significant aspects of the disclosed techniques, are not set forth in the following description for purposes of clarity. Moreover, although the following disclosure sets forth several embodiments of different aspects of the present technology, several other embodiments may have different configurations or different components than those described in this section. Accordingly, the disclosed techniques may have other embodiments with additional elements or without several of the elements described below.

Many embodiments or aspects of the present disclosure described below may take the form of computer- or controller-executable instructions, including routines executed by a programmable computer or controller. Those skilled in the relevant art will appreciate that the disclosed techniques can be practiced on or with computer or controller systems other than those shown and described below. The techniques described herein can be embodied in a special-purpose computer or data processor that is specifically programmed, configured, or constructed to execute one or more of the computer-executable instructions described below. Accordingly, the terms processor, processing unit, computer and controller as generally used herein refer to any data processor and can include Internet appliances and handheld devices (including palm-top computers, wearable computers, cellular or mobile phones, multiprocessor systems, processor-based or programmable consumer electronics, network computers, minicomputers, and the like). For ease of description, the singular term processor, controller, or computer may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more processors, or a processor, or a controller, may implement a single hardware component, or two or more hardware components. Information handled by these computers and controllers can be presented at any suitable display medium, including a liquid crystal display (LCD). Instructions for executing computer- or controller-executable tasks can be stored in or on any suitable computer-readable medium, including hardware, firmware, or a combination of hardware and firmware. Instructions can be contained in any suitable memory device, including, for example, a flash drive, USB device, and/or other suitable medium.

The terms "coupled" and "connected," along with their derivatives, can be used herein to describe structural relationships between components. It should be understood that these terms are not intended as synonyms for each other. Rather, in particular embodiments, "connected" can be used to indicate that two or more elements are in direct contact with each other. Unless otherwise made apparent in the context, the term "coupled" can be used to indicate that two or more elements are in either direct or indirect (with other intervening elements between them) contact with each other, or that the two or more elements co-operate or interact with each other (e.g., as in a cause-and-effect relationship, such as for signal transmission/reception or for function calls), or both.

Any reference herein to image analysis by a computing system may be performed according to or using spatial structure information that may include depth information which describes respective depth value of various locations relative to a chosen point. The depth information may be used to identify objects or estimate how objects are spatially arranged. In some instances, the spatial structure information may include or may be used to generate a point cloud that describes locations of one or more surfaces of an object. Spatial structure information is merely one form of possible image analysis and other forms known by one skilled in the art may be used in accordance with the methods described herein.

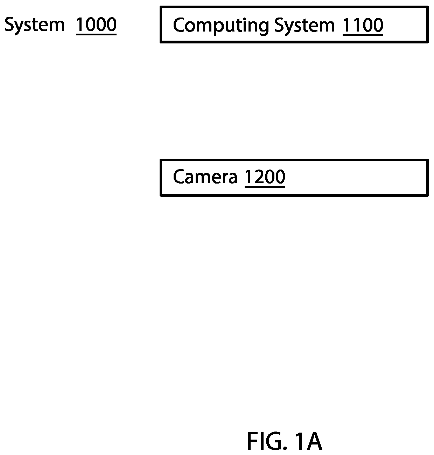

FIG. 1A illustrates a system 1000 for performing object detection, or, more specifically, object recognition. More particularly, the system 1000 may include a computing system 1100 and a camera 1200. In this example, the camera 1200 may be configured to generate image information which describes or otherwise represents an environment in which the camera 1200 is located, or, more specifically, represents an environment in the camera's 1200 field of view (also referred to as a camera field of view). The environment may be, e.g., a warehouse, a manufacturing plant, a retail space, or other premises. In such instances, the image information may represent objects located at such premises, such as boxes, bins, cases, crates, pallets, or other containers as well as layer dividers as discussed herein. The system 1000 may be configured to generate, receive, and/or process the image information, such as by using the image information to distinguish between individual objects in the camera field of view, to perform object recognition or object registration based on the image information, and/or perform robot interaction planning based on the image information, as discussed below in more detail (the terms "and/or" and "or" are used interchangeably in this disclosure). Robot interaction planning may be used to, e.g., control a robot at the premises to facilitate robot interaction between the robot and the containers or other objects. The computing system 1100 and the camera 1200 may be located at the same premises or may be located remotely from each other. For instance, the computing system 1100 may be part of a cloud computing platform hosted in a data center which is remote from the warehouse or retail space and may be communicating with the camera 1200 via a network connection.

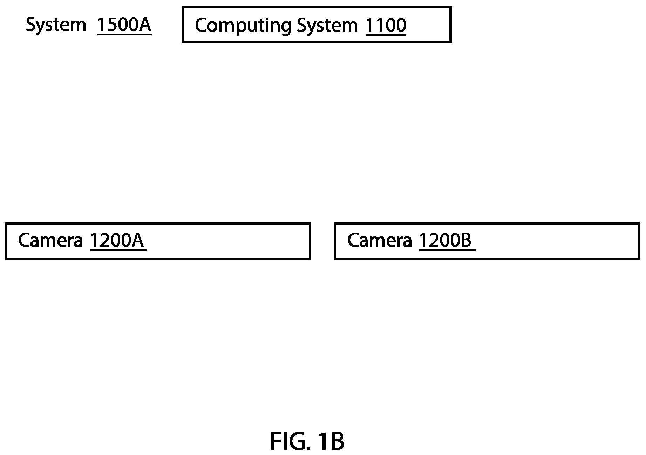

In an embodiment, the camera 1200 (which may also be referred to as an image sensing device) may be a 2D camera and/or a 3D camera. For example, FIG. 1B illustrates a system 1500A (which may be an embodiment of the system 1000) that includes the computing system 1100 as well as a camera 1200A and a camera 1200B, both of which may be an embodiment of the camera 1200. In this example, the camera 1200A may be a 2D camera that is configured to generate 2D image information which includes or forms a 2D image that describes a visual appearance of the environment in the camera's field of view. The camera 1200B may be a 3D camera (also referred to as a spatial structure sensing camera or spatial structure sensing device) that is configured to generate 3D image information which includes or forms spatial structure information regarding an environment in the camera's field of view. The spatial structure information may include depth information (e.g., a depth map) which describes respective depth values of various locations relative to the camera 1200B, such as locations on surfaces of various objects in the camera 1200B's field of view. These locations in the camera's field of view or on an object's surface may also be referred to as physical locations. The depth information in this example may be used to estimate how the objects are spatially arranged in three-dimensional (3D) space. In some instances, the spatial structure information may include or may be used to generate a point cloud that describes locations on one or more surfaces of an object in the camera 1200B's field of view. More specifically, the spatial structure information may describe various locations on a structure of the object (also referred to as an object structure).

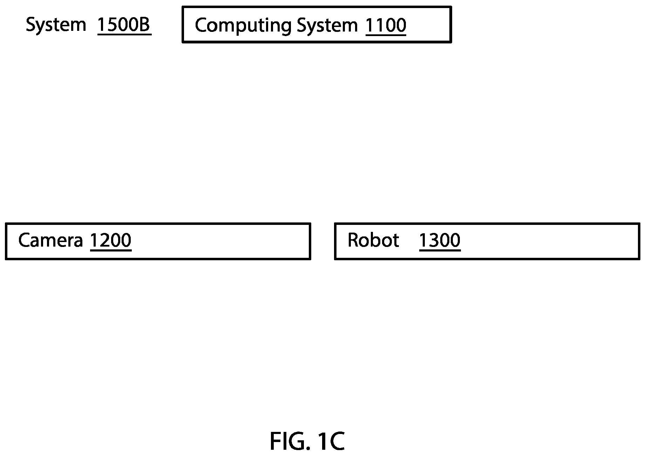

In an embodiment, the system 1000 may be a robot operating system for facilitating robot interaction between a robot and various objects in the environment of the camera 1200. For example, FIG. 1C illustrates a robot operating system 1500B, which may be an embodiment of the system 1000/1500A of FIGS. 1A and 1B. The robot operating system 1500B may include the computing system 1100, the camera 1200, and a robot 1300. As stated above, the robot 1300 may be used to interact with one or more objects in the environment of the camera 1200, such as with boxes, crates, bins, cases, pallets, other containers, and/or layer dividers as discussed herein. For example, the robot 1300 may be configured to pick up the containers from one location and move them to another location. In some cases, the robot 1300 may be used to perform a de-palletization operation in which a group of containers or other objects are unloaded and moved to, e.g., a conveyor belt, or may be used to perform a palletization operation in which containers are stacked onto a pallet to prepare them for transport. In some examples, during the de-palletization operation, the robot 1300 may identify and pick up layer separators that are disposed between layers of objects arranged on a pallet and store them or move them to a location away from the conveyor belt. In some examples, the camera 1200 may be attached to the robot 1300 or the robot 3300, discussed below. This is also known as a camera in-hand or a camera on-hand solution. The camera 1200 may be attached to a robot arm 3320 of the robot 1300. The robot arm 3320 may move to various picking regions to generate image information regarding those regions. In some implementations, the camera 1200 may be separate from the robot 1300. For instance, the camera 1200 may be mounted to a ceiling of a warehouse or other structure and may remain stationary relative to the robot 1300. In some implementations, multiple cameras 1200 may be used, including multiple cameras 1200 separate from the robot 1300 and/or cameras 1200 separate from the robot 1300 being used in conjunction with in-hand cameras 1200. In some implementations, a camera 1200 or cameras 1200 may be mounted or affixed to a dedicated robotic system separate from the robot 1300 used for object manipulation, such as a robotic arm, gantry, or other automated system configured for camera movement. Throughout the specification, "control" or "controlling" the camera 1200 may be discussed. For camera in-hand solutions, control of the camera 1200 also includes control of the robot 1300 to which the camera 1200 is mounted or attached.

In an embodiment, the computing system 1100 of FIGS. 1A-1C may form or be integrated into the robot 1300, which may also be referred to as a robot controller. A robot control system may be included in the robot operating system 1500B, and is configured to e.g., generate commands for the robot 1300, such as a robot interaction movement command for controlling robot interaction between the robot 1300 and a container, layer separator, or other object. In such an embodiment, the computing system 1100 may be configured to generate such commands based on, e.g., image information generated by the camera 1200. In some examples, the computing system 1100 may be configured to determine a motion plan based on the image information, wherein the motion plan may be intended for, e.g., gripping or otherwise picking up an object. The computing system 1100 may generate one or more robot interaction movement commands to execute the motion plan.

In an embodiment, the computing system 1100 may form or be part of a vision system. The vision system may be a system which generates, e.g., vision information which describes an environment in which the robot 1300 is located, or additionally, describes an environment in which the camera 1200 is located. The vision information may include the 3D image information and/or the 2D image information discussed above, or some other image information. In some scenarios, if the computing system 1100 forms a vision system, the vision system may be part of the robot control system discussed above or may be separate from the robot control system. If the vision system is separate from the robot control system, the vision system may be configured to output information describing the environment in which the robot 1300 is located. The information may be outputted to the robot control system, which may receive such information from the vision system and performs motion planning and/or generates robot interaction movement commands based on the information. Further information regarding the vision system is detailed below.

In an embodiment, the computing system 1100 may communicate with the camera 1200 and/or with the robot 1300 via a direct connection, such as a connection provided via a dedicated wired communication interface, such as a RS-232 interface, a universal serial bus (USB) interface, and/or via a local computer bus, such as a peripheral component interconnect (PCI) bus. In an embodiment, the computing system 1100 may communicate with the camera 1200 and/or with the robot 1300 via a network. The network may be any type and/or form of network, such as a personal area network (PAN), a local-area network (LAN), e.g., Intranet, a metropolitan area network (MAN), a wide area network (WAN), or the Internet. The network may utilize different techniques and layers or stacks of protocols, including, e.g., the Ethernet protocol, the internet protocol suite (TCP/IP), the ATM (Asynchronous Transfer Mode) technique, the SONET (Synchronous Optical Networking) protocol, or the SDH (Synchronous Digital Hierarchy) protocol.

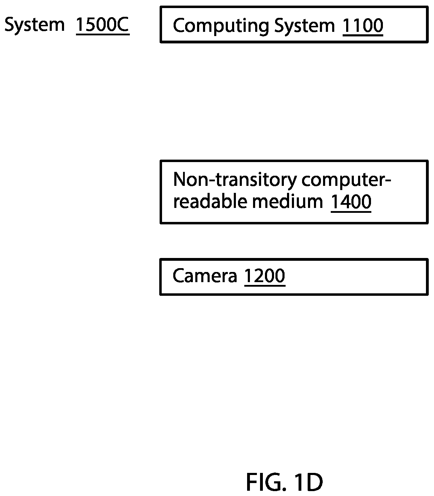

In an embodiment, the computing system 1100 may communicate information directly with the camera 1200 and/or with the robot 1300, or may communicate via an intermediate storage device, or more generally an intermediate non-transitory computer-readable medium. For example, FIG. 1D illustrates a system 1500C, which may be an embodiment of the system 1000/1500A/1500B, that includes a non-transitory computer-readable medium 1400, which may be external to the computing system 1100, and may act as an external buffer or repository for storing, e.g., image information generated by the camera 1200. In such an example, the computing system 1100 may retrieve or otherwise receive the image information from the non-transitory computer-readable medium 1400. Examples of the non-transitory computer readable medium 1400 include an electronic storage device, a magnetic storage device, an optical storage device, an electromagnetic storage device, a semiconductor storage device, or any suitable combination thereof. The non-transitory computer-readable medium may form, e.g., a computer diskette, a hard disk drive (HDD), a solid-state drive (SDD), a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), and/or a memory stick.

As stated above, the camera 1200 may be a 3D camera and/or a 2D camera. The 2D camera may be configured to generate a 2D image, such as a color image or a grayscale image. The 3D camera may be, e.g., a depth-sensing camera, such as a time-of-flight (TOF) camera or a structured light camera, or any other type of 3D camera. In some cases, the 2D camera and/or 3D camera may include an image sensor, such as a charge coupled devices (CCDs) sensor and/or complementary metal oxide semiconductors (CMOS) sensor. In an embodiment, the 3D camera may include lasers, a LIDAR device, an infrared device, a light/dark sensor, a motion sensor, a microwave detector, an ultrasonic detector, a RADAR detector, or any other device configured to capture depth information or other spatial structure information.

As stated above, the image information may be processed by the computing system 1100. In an embodiment, the computing system 1100 may include or be configured as a server (e.g., having one or more server blades, processors, etc.), a personal computer (e.g., a desktop computer, a laptop computer, etc.), a smartphone, a tablet computing device, and/or other any other computing system. In an embodiment, any or all of the functionality of the computing system 1100 may be performed as part of a cloud computing platform. The computing system 1100 may be a single computing device (e.g., a desktop computer), or may include multiple computing devices.

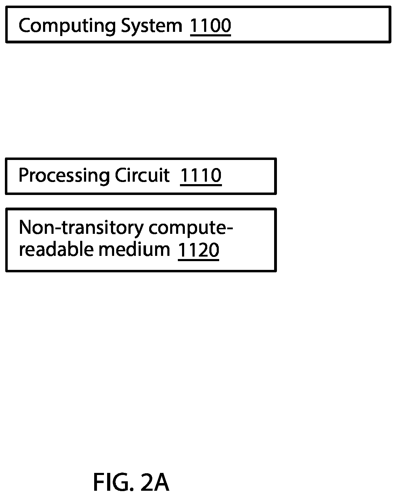

FIG. 2A illustrates an example of the computing system 1100. The computing system 1100 in this embodiment includes a processing circuit 1110 and a non-transitory computer-readable medium (or media) 1120. In some instances, the processing circuit 1110 may include processors (e.g., central processing units (CPUs), special-purpose computers, and/or onboard servers) configured to execute instructions (e.g., software instructions) stored on the non-transitory computer-readable medium 1120 (e.g., computer memory). In some embodiments, the processors may be included in a separate/stand-alone controller that is operably coupled to the other electronic/electrical devices. The processors may implement the program instructions to control/interface with other devices, thereby causing the computing system 1100 to execute actions, tasks, and/or operations. In an embodiment, the processing circuit 1110 includes one or more processors, one or more processing cores, a programmable logic controller ("PLC"), an application specific integrated circuit ("ASIC"), a programmable gate array ("PGA"), a field programmable gate array ("FPGA"), any combination thereof, or any other processing circuit.

In an embodiment, the non-transitory computer-readable medium 1120, which is part of the computing system 1100, may be an alternative or addition to the intermediate non-transitory computer-readable medium 1400 discussed above. The non-transitory computer-readable medium 1120 may be a storage device, such as an electronic storage device, a magnetic storage device, an optical storage device, an electromagnetic storage device, a semiconductor storage device, or any suitable combination thereof, for example, such as a computer diskette, a hard disk drive (HDD), a solid state drive (SSD), a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, any combination thereof, any other storage device, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In some instances, the non-transitory computer-readable medium 1120 may include multiple storage devices. In an example, the instructions or software and any associated data, data files, and data structures are distributed over network-coupled computer systems so that the instructions and software and any associated data, data files, and data structures are stored, accessed, and executed in a distributed fashion by the one or more processors or computers. In certain implementations, the non-transitory computer-readable medium 1120 is configured to store image information generated by the camera 1200 and received by the computing system 1100. In some instances, the non-transitory computer-readable medium 1120 may store one or more object recognition template used for performing methods and operations discussed herein. The non-transitory computer-readable medium 1120 may alternatively or additionally store computer readable program instructions that, when executed by the processing circuit 1110, causes the processing circuit 1110 to perform one or more methodologies described here.

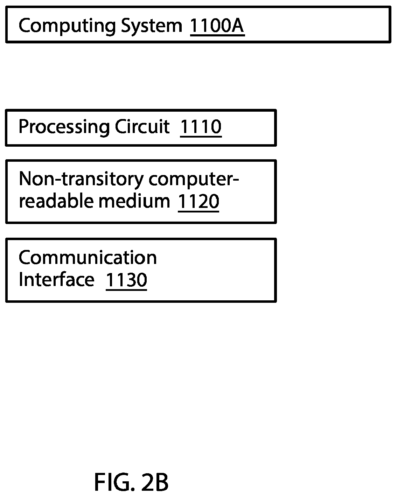

FIG. 2B depicts a computing system 1100A that is an embodiment of the computing system 1100 and includes a communication interface 1131. The communication interface 1131 may be configured to, e.g., receive image information generated by the camera 1200 of FIGS. 1A-1D. The image information may be received via the intermediate non-transitory computer-readable medium 1400 or the network discussed above, or via a more direct connection between the camera 1200 and the computing system 1100/1100A. In an embodiment, the communication interface 1131 may be configured to communicate with the robot 1300 of FIG. 1C. If the computing system 1100 is external to a robot control system, the communication interface 1131 of the computing system 1100 may be configured to communicate with the robot control system. The communication interface 1131 may also be referred to as a communication component or communication circuit, and may include, e.g., a communication circuit configured to perform communication over a wired or wireless protocol. As an example, the communication circuit may include a RS-232 port controller, a USB controller, an Ethernet controller, a Bluetooth^{®} controller, a PCI bus controller, any other communication circuit, or a combination thereof.

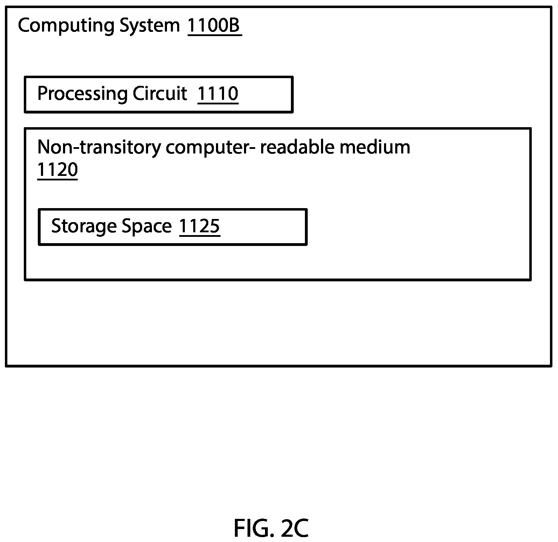

In an embodiment, as depicted in FIG. 2C, the non-transitory computer-readable medium 1120 may include a storage space 1125 configured to store one or more data objects discussed herein. For example, the storage space may store object recognition templates, image information, object image information, thresholds, robotic arm move commands, and any additional data objects the computing systems discussed herein may require access to.

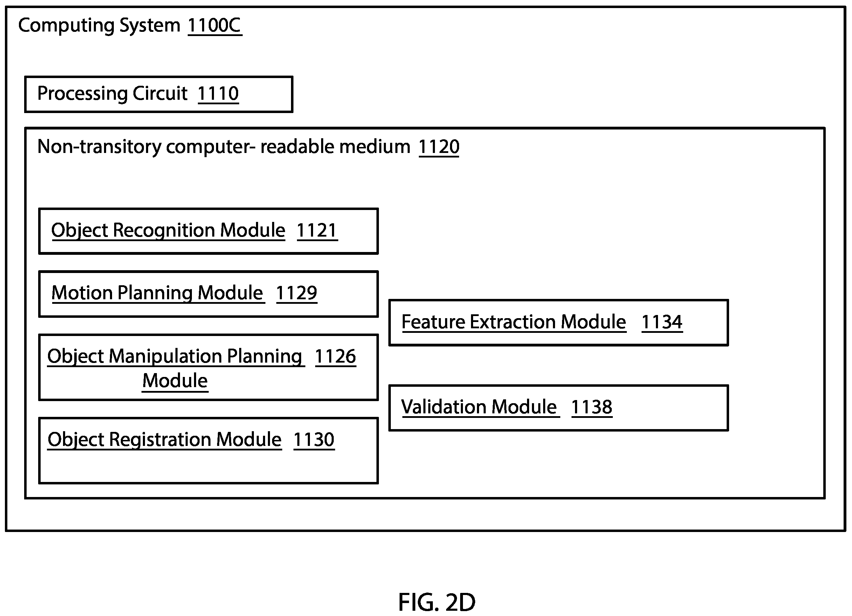

In an embodiment, the processing circuit 1110 may be programmed by one or more computer-readable program instructions stored on the non-transitory computer-readable medium 1120. For example, FIG. 2D illustrates a computing system 1100C, which is an embodiment of the computing system 1100/1100A/1100B, in which the processing circuit 1110 is programmed by one or more modules, including an object recognition module 1121, a motion planning module 1129, and an object manipulation planning module 1126. The processing circuit 1110 may further be programmed with an object registration module 1130, a feature extraction module 1134, and a validation module 1138. Each of the above modules may represent computer-readable program instructions configured to carry out certain tasks when instantiated on one or more of the processors, processing circuits, computing systems, etc., described herein. Each of the above modules may operate in concert with one another to achieve the functionality described herein. Various aspects of the functionality described herein may be carried out by one or more of the software modules described above and the software modules and their descriptions are not to be understood as limiting the computational structure of systems disclosed herein. For example, although a specific task or functionality may be described with respect to a specific module, that task or functionality may also be performed by a different module as needed. Further, the system functionality described herein may be performed by a different set of software modules configured with a different breakdown or allotment of functionality.

In an embodiment, the object recognition module 1121 may be configured to obtain and analyze image information as discussed throughout the disclosure. Methods, systems, and techniques discussed herein with respect to image information may use the object recognition module 1121. The obj ect recognition module may further be configured for object recognition tasks related to object identification, as discussed herein.

The motion planning module 1129 may be configured to plan and execute the movement of a robot. For example, the motion planning module 1129 may interact with other modules described herein to plan motion of a robot 3300 for object retrieval operations and for camera placement operations. Methods, systems, and techniques discussed herein with respect to robotic arm movements and trajectories may be performed by the motion planning module 1129.

The object manipulation planning module 1126 may be configured to plan and execute the object manipulation activities of a robotic arm, e.g., grasping and releasing objects and executing robotic arm commands to aid and facilitate such grasping and releasing.

The object registration module 1130 may be configured to obtain, store, generate, and otherwise process object registration information that may be required for various tasks discussed herein. The object registration module 1130 may store dimensions and thresholds related to the various objects that may be detected, identified, and retrieved by the robotic system. The object registration module 1130 may be configured to interact or communicate with any other module, as needed.

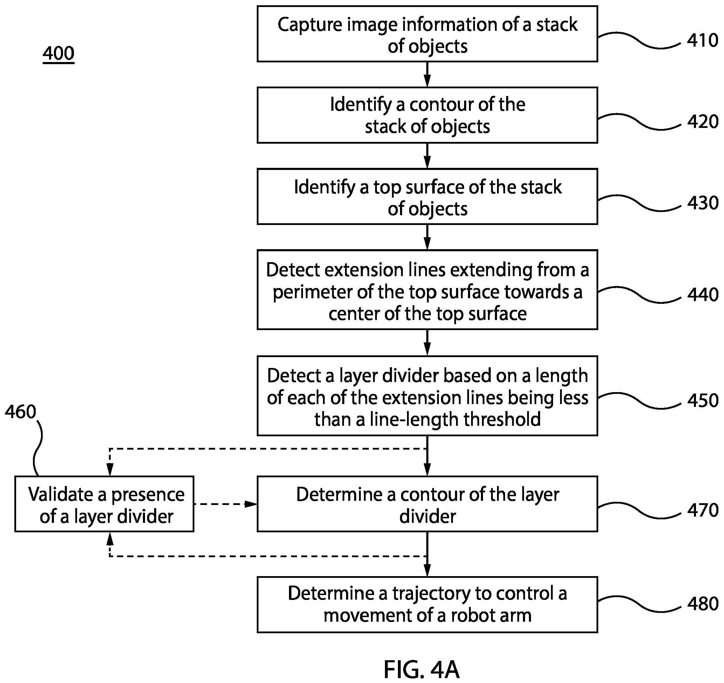

The feature extraction module 1134 may be configured to complete feature extraction and generation tasks as discussed herein, for example, as related to FIGS. 4A-5C. The feature extraction module 1134 may be configured to interact with the object registration module 1130, and any other module, as needed.

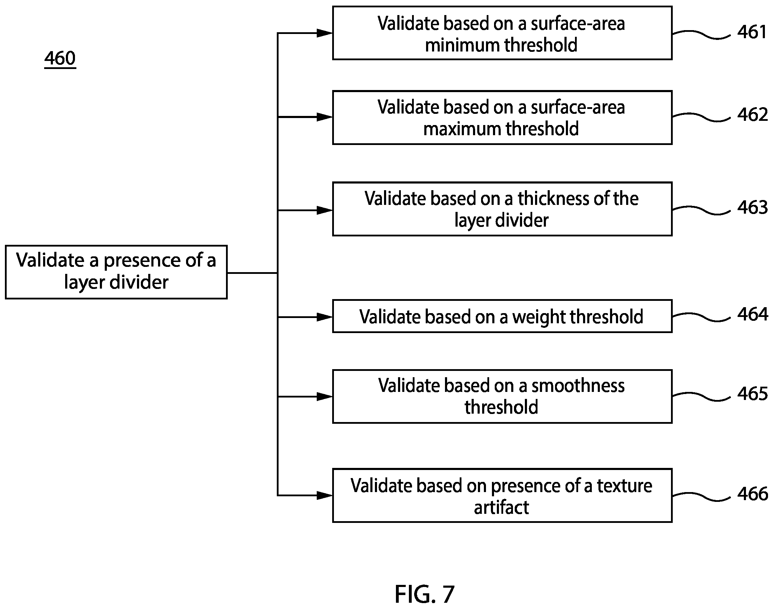

The validation module 1138 may be configured to complete validation tasks as discussed herein, for example, as related to FIGS. 4A and 7. The validation module 1138 may be configured to interact with the object registration module 1130, the feature extraction module 1134, and any other modules, as needed.

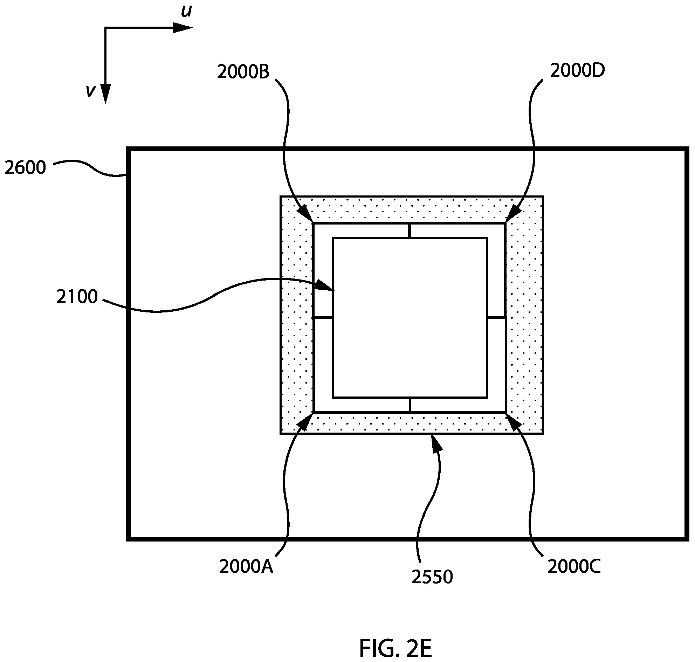

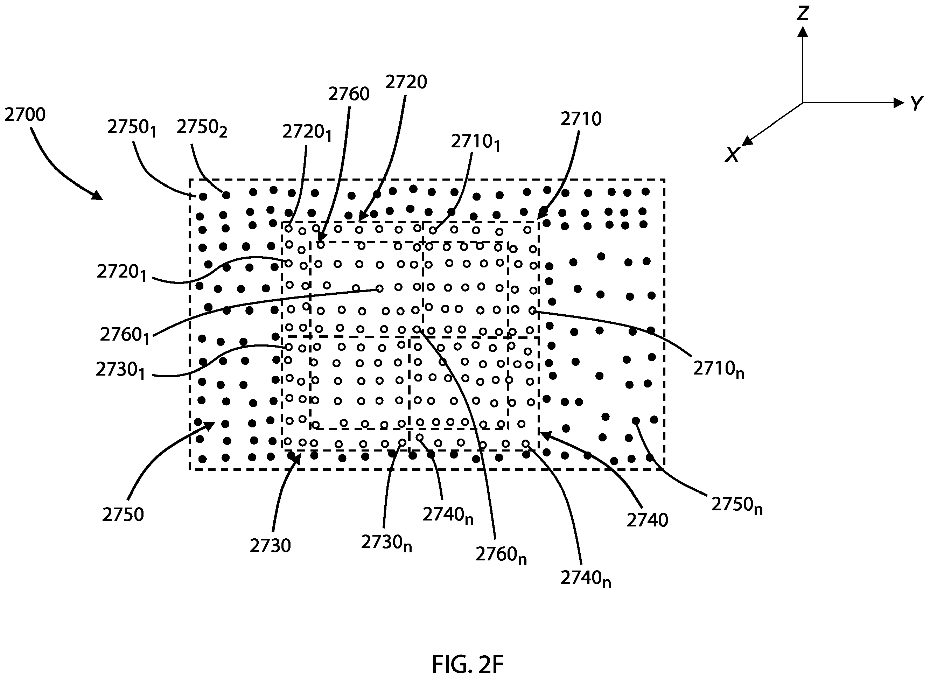

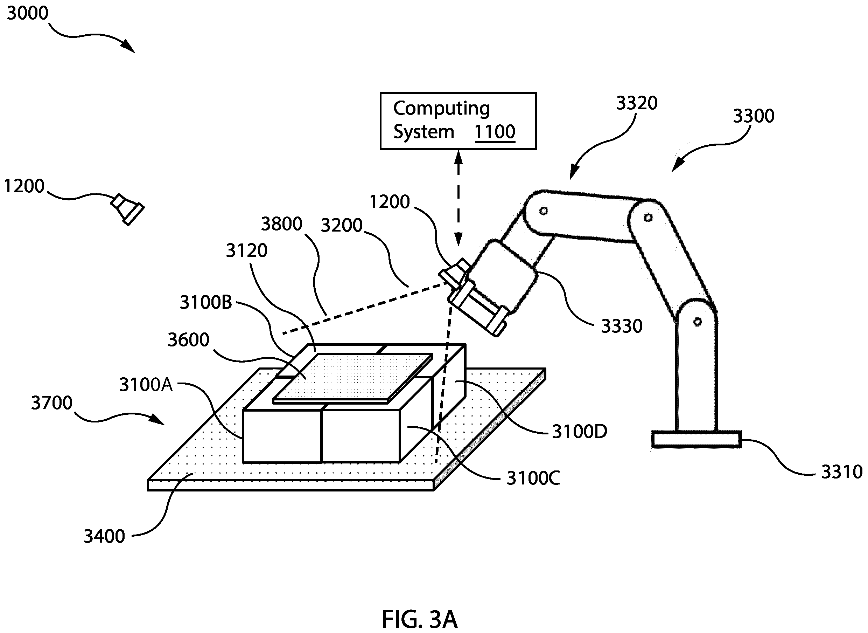

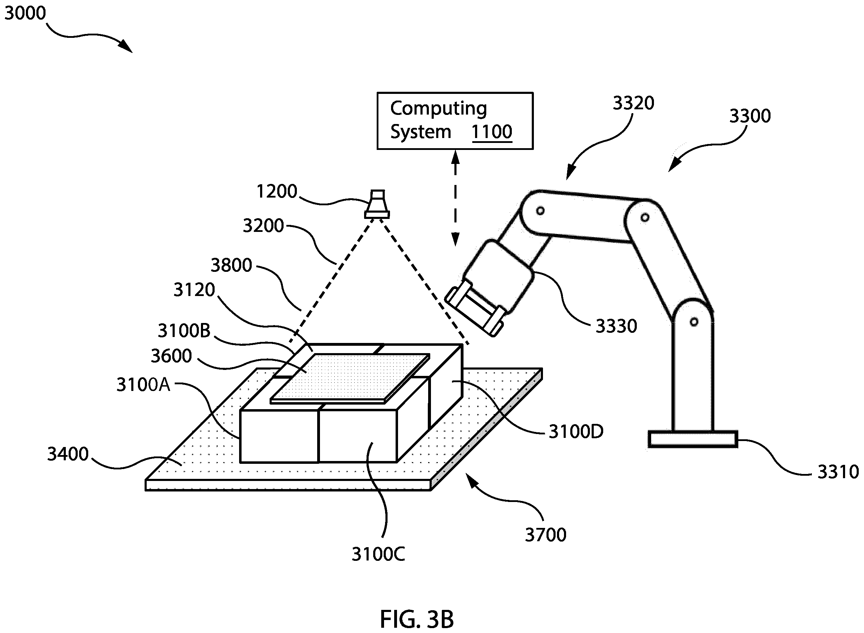

With reference to FIGS. 2E, 2F, 3A, and 3B, methods related to the object recognition module 1121 that may be performed for image analysis are explained. FIGS. 2E and 2F illustrate example image information associated with image analysis methods while FIGS. 3A and 3B illustrate example robotic environments associated with image analysis methods. References herein related to image analysis by a computing system may be performed according to or using spatial structure information that may include depth information which describes respective depth value of various locations relative to a chosen point. The depth information may be used to identify objects or estimate how objects are spatially arranged. In some instances, the spatial structure information may include or may be used to generate a point cloud that describes locations of one or more surfaces of an object. Spatial structure information is merely one form of image analysis and other forms known by one skilled in the art may be used in accordance with the methods described herein.

In embodiments, the computing system 1100 may obtain image information representing an object in a camera field of view (e.g., 3200) of a camera 1200. In some examples, the object may be a layer divider 3600 disposed on the top surface 3120 of objects 3100A/3100B/3100C/3100D/3600 on a pallet 3400 in the field of view 3200 of a camera 1200. The image information 2600, 2700, as illustrated in FIGS 2E and 2F, may be generated by the camera (e.g., 1200) when the layer divider 3600 is (or has been) in the camera field of view 3200 and may describe the layer divider 3600, the pallet 3400, one or more of the individual objects 3100A/3100B/3100C/3100D, and/or the scene 3800. The object appearance describes the appearance of a layer divider 3600 and the surrounding objects 3100A/3100B/3100C/3100D, and the pallet 3400 from the viewpoint of the camera 1200. If there are multiple objects in the camera field of view, the camera may generate image information that represents the multiple objects or a single object (such image information related to a single object may be referred to as object image information), as needed. The image information may be generated by the camera (e.g., 1200) when the group of objects is (or has been) in the camera field of view, and may include, e.g., 2D image information and/or 3D image information.

As an example, FIG. 2E depicts a first set of image information, or more specifically, 2D image information 2600, which, as stated above, is generated by the camera 1200 and represents the objects 3100A/3100B/3100C/3100D, the layer divider 3600, and the pallet 3400 of FIG. 3A. In some examples, the 2D image information 2600 may be a grayscale or color image and may describe an appearance of the objects 3100A/3100B/3100C/3100D, the layer divider 3600, and the pallet 3400 from a viewpoint of the camera 1200. In an embodiment, the 2D image information 2600 may correspond to a single-color channel (e.g., red, green, or blue color channel) of a color image. If the camera 1200 is disposed above the objects 3100A/3100B/3100C/3100D, then the 2D image information 2600 may represent an appearance of respective top surfaces of the objects 3100A/3100B/3100C/3100D, the layer divider 3600, and the pallet 3400. In the example of FIG. 2E, the 2D image information 2600 may include respective portions 2000A/2000B/2000C/2000D, also referred to as image portions or object image information, which represent respective top surfaces of the objects 3100A/3100B/3100C/3100D. In the example of FIG. 2E, the 2D image information 2600 may include image portion 2100, also referred to as image portions that represent a top surface surfaces of the layer divider 3600 disposed on the objects 3100A/3100B/3100C/3100D. In the example of FIG. 2E, the 2D image information 2600 may include 2550, also referred to as image portions or object image information, which represent respective surfaces of the pallet 3400, on which the objects 3100A/3100B/3100C/3100D are disposed.

In FIG. 2E, each image portion 2000A/2000B/2000C/2000D/2100/2550 of the 2D image information 2600 may be an image region, or more specifically a pixel region (if the image is formed by pixels). Each pixel in the pixel region of the 2D image information 2600 may be characterized as having a position that is described by a set of coordinates [U, V] and may have values that are relative to a camera coordinate system, or some other coordinate system, as shown in FIGS. 2E and 2F. Each of the pixels may also have an intensity value, such as a value between 0 and 255 or 0 and 1023. In further embodiments, each of the pixels may include any additional information associated with pixels in various formats (e.g., hue, saturation, intensity, CMYK, RGB, etc.)

As stated above, the image information may in some embodiments be all or a portion of an image, such as the 2D image information 2600. In examples, the computing system 1100 may be configured to extract an image portion 2100 from the 2D image information 2600 to obtain only the image information associated with a corresponding object, *i.e.,* layer divider 3600. Where an image portion (such as image portion 2000A) is directed towards a single object it may be referred to as object image information. Object image information is not required to contain information only about an object to which it is directed. For example, the object to which it is directed may be close to, under, over, or otherwise situated in the vicinity of one or more other objects. In such cases, the object image information may include information about the object to which it is directed as well as to one or more neighboring objects. The computing system 1100 may extract the image portion 2000A by performing an image segmentation or other analysis or processing operation based on the 2D image information 2600 and/or 3D image information 2700 illustrated in FIG. 2F. In some implementations, an image segmentation or other processing operation may include detecting image locations at which physical edges of objects appear (e.g., edges of the object or gaps between objects in the image) in the 2D image information 2600 and using such image locations to identify object image information that is limited to representing an individual object in a camera field of view (e.g., 3200) and substantially excluding other objects. By "substantially excluding," it is meant that the image segmentation or other processing techniques are designed and configured to exclude non-target objects from the object image information but that it is understood that errors may be made, noise may be present, and various other factors may result in the inclusion of portions of other objects.

FIG. 2F depicts an example in which the image information is 3D image information 2700. In some examples, the 3D image information 2700 may include, e.g., a depth map or a point cloud that indicates respective depth values of various locations on one or more surfaces (e.g., top surface or other outer surfaces) of the objects 3100A/3100B/3100C/3100D, the layer divider 3600, and the pallet 3400. In some implementations, an image segmentation operation for extracting image information may involve detecting image locations at which physical edges of objects appear (e.g., edges of a box) in the 3D image information 2700 and using such image locations to identify an image portion (e.g., 2730) that is limited to representing an individual object in a camera field of view (e.g., 3100A).

The respective depth values may be relative to the camera 1200 which generates the 3D image information 2700 or may be relative to some other reference point. In some embodiments, the 3D image information 2700 may include a point cloud which includes respective coordinates for various locations on structures of objects in the camera field of view (e.g., 3200). In the example of FIG. 2F, the point cloud may include respective sets of coordinates that describe the location of the respective surfaces of the objects 3100A/3100B/3100C/3100D, the layer divider 3600, and the pallet 3400. The coordinates may be 3D coordinates, such as [X Y Z] coordinates, and may have values that are relative to a camera coordinate system, or some other coordinate system. For instance, the 3D image information 2700 may include a first image portion 2710, also referred to as an image portion, which indicates respective depth values for a set of locations 2710₁-2710ₙ, which are also referred to as physical locations on a surface of the object 3100D. In another example, the 3D image information 2700 may further include a second, a third, a fourth, and a fifth portion 2720, 2730, 2740, 2750, and 2760. These portions may then further indicate respective depth values for a set of locations, which may be represented by 2720₁-2720ₙ, 2730₁-2730ₙ, 2740₁-2740ₙ, 2750₁-2750ₙ, and 2760₁-2760ₙ respectively. These figures are merely examples, and any number of objects with corresponding image portions may be used. Similarly to as stated above, the 3D image information 2700 obtained may in some instances be a portion of a first set of 3D image information 2700 generated by the camera. In the example of FIG. 2F, if the 3D image information 2700 obtained represents an object 3100A of FIG. 3A, then the 3D image information 2700 may be narrowed to refer to only the first image portion 2710. Similar to the discussion of 2D image information 2600, each of the first, second, third, fourth, and fifth image portions 2730 may pertain to individual objects and may be referred to as object image information. Thus, object image information, as used herein, may include 2D and/or 3D image information.

In an embodiment, an image normalization operation may be performed by the computing system 1100 as part of obtaining the image information. The image normalization operation may involve transforming an image or an image portion generated by the camera 1200, so as to generate a transformed image or transformed image portion. For example, the image information, which may include the 2D image information 2600, the 3D image information 2700, or a combination of the two, may undergo an image normalization operation to attempt to cause the image information to be altered in viewpoint, object pose, lighting condition associated with the visual description information. Such normalizations may be performed to facilitate a more accurate comparison between the image information and model (e.g., template) information. The viewpoint may refer to a pose of an object relative to the camera 1200, and/or an angle at which the camera 1200 is viewing the object when the camera 1200 generates an image representing the object.

For example, the image information may be generated during an object recognition operation in which a target object is in the camera field of view 3200. The camera 1200 may generate image information that represents the target object when the target object has a specific pose relative to the camera. For instance, the target object may have a pose which causes its top surface to be perpendicular to an optical axis of the camera 1200. In such an example, the image information generated by the camera 1200 may represent a specific viewpoint, such as a top view of the target object. In some instances, when the camera 1200 is generating the image information during the object recognition operation, the image information may be generated with a particular lighting condition, such as a lighting intensity. In such instances, the image information may represent a particular lighting intensity, lighting color, or other lighting condition.

In an embodiment, the image normalization operation may involve adjusting an image or an image portion of a scene generated by the camera, so as to cause the image or image portion to better match a viewpoint and/or lighting condition associated with information of an object recognition template. The adjustment may involve transforming the image or image portion to generate a transformed image which matches at least one of an object pose or a lighting condition associated with the visual description information of the object recognition template.

The viewpoint adjustment may involve processing, warping, and/or shifting of the image of the scene so that the image represents the same viewpoint as visual description information that may be included within an object recognition template. Processing, for example, may include altering the color, contrast, or lighting of the image, warping of the scene may include changing the size, dimensions, or proportions of the image, and shifting of the image may include changing the position, orientation, or rotation of the image. In an example embodiment, processing, warping, and or/shifting may be used to alter an object in the image of the scene to have an orientation and/or a size which matches or better corresponds to the visual description information of the object recognition template. If the object recognition template describes a head-on view (e.g., top view) of some object, the image of the scene may be warped so as to also represent a head-on view of an object in the scene.

Further aspects of the object recognition methods performed herein are described in greater detail in U.S. Application No. 16/991,510, filed August 12, 2020, and U.S. Application No. 16/991,466, filed August 12, 2020, each of which is incorporated herein by reference.

In various embodiments, the terms "computer-readable instructions" and "computer-readable program instructions" are used to describe software instructions or computer code configured to carry out various tasks and operations. In various embodiments, the term "module" refers broadly to a collection of software instructions or code configured to cause the processing circuit 1110 to perform one or more functional tasks. The modules and computer-readable instructions may be described as performing various operations or tasks when a processing circuit or other hardware component is executing the modules or computer-readable instructions.

FIGS. 3A-3B illustrate exemplary environments in which the computer-readable program instructions stored on the non-transitory computer-readable medium 1120 are utilized via the computing system 1100 to increase efficiency of object identification, detection, and retrieval operations and methods. The image information obtained by the computing system 1100 and exemplified in FIG. 3A influences the system's decision-making procedures and command outputs to a robot 3300 present within an object environment.

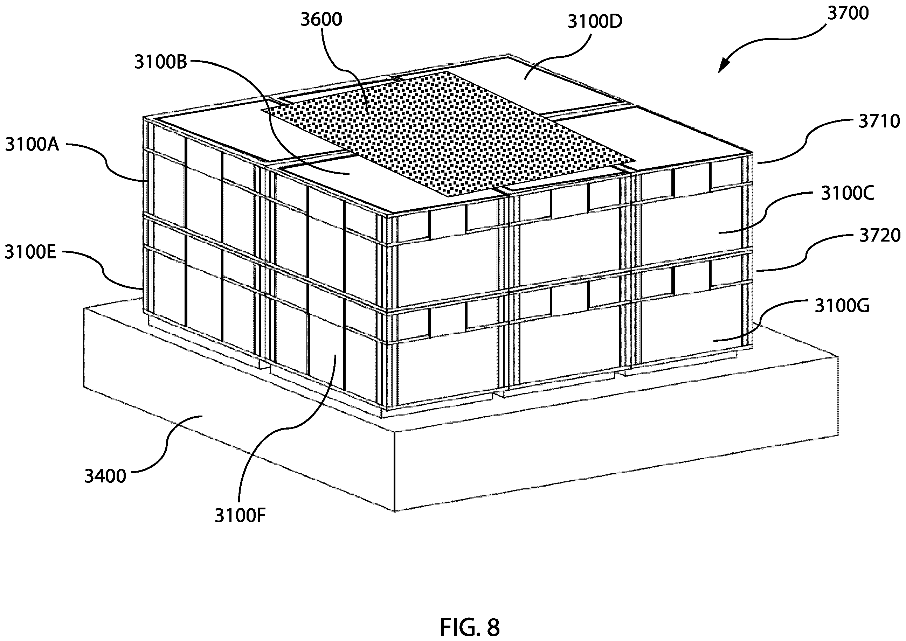

FIGS. 3A - 3B illustrate example environments in which the process and methods described herein may be performed. FIG. 3A depicts an environment having a system 3000 (which may be an embodiment of the system 1000/1500A/1500B/1500C of FIGS. 1A-1D) that includes at least the computing system 1100, a robot 3300, and a camera 1200. The camera 1200 may be an embodiment of the camera 1200 and may be configured to generate image information which represents a scene 3800 in a camera field of view 3200 of the camera 1200, or more specifically represents a stack of objects 3700 (such as boxes) in the camera field of view 3200, such as objects 3100A, 3100B, 3100C, 3100D. In one example, each of the objects 3 100A-3100D may be, e.g., a container such as a box or crate, which are disposed on an object, such as a pallet 3400. A layer divider 3600 may be disposed on a top surface 3120 of the objects 3100A/3100B/3100C/3100D. The layer divider may divide two layers of obj ects in the stack of objects 3700. In some examples, the stack of objects 3700 may collectively refer to the objects 3100A/3100B/3100C/3100D, the layer divider 3600, and the pallet 3400. For ease of illustration and explanation, only one layer of objects 3100A/3100B/3100C/3100D with a layer divider 3600 are illustrated in the examples of FIGS. 3A and 3B. However, it will be understood that the stack of objects 3700 may include multiple layers of objects, where a layer divider 3600 may or may not be disposed between two layers of objects. An example of two layers of obj ects 3100A/3100B/3100C/3100D/3100E/3100F/3100G/3100H stacked on a pallet 3400 with a layer divider 3600 disposed on a top surface of the second layer is illustrated in FIG. 8.

FIG. 3A illustrates an embodiment including multiple objects 3100A-3100D where the camera field of view (e.g., 3200) is captured using a camera 1200 attached to the robot 3300. While FIG. 3B illustrates an embodiment where the camera field of view (e.g., 3200) is captured using a camera 1200 that is disposed separately from the robot 3300. Each of the objects 3100A/3100B/3100C/3100D may be, e.g., a box, crate, case, bin, or other container. The objects *i*.*e*., objects 3100A/3100B/3100C/3100D may be disposed on another object, such as a pallet 3400, which may also be at least partially disposed within the camera field of view 3200. In some scenarios, the pallet 3400 may be used to stack or otherwise dispose containers or other objects which may have a large variety of sizes (e.g., wide variety of length, width, and height values), and with a large variety of stacking or placement configurations. A layer divider 3600 may or may not be disposed between layers of objects on the pallet 3400.

In an embodiment, the system 3000 of FIG. 3A may include one or more light sources. The light source may be, e.g., a light emitting diode (LED), a halogen lamp, or any other light source, and may be configured to emit visible light, infrared radiation, or any other form of light toward surfaces of the objects 3100A - 3100D, the layer divider 3600, and the pallet 3400. In some implementations, the computing system 1100 may be configured to communicate with the light source to control when the light source is activated. In other implementations, the light source may operate independently of the computing system 1100.

In an embodiment, the system 3000 may include a camera 1200 or multiple cameras 1200, including a 2D camera that is configured to generate 2D image information 2600 and a 3D camera that is configured to generate 3D image information 2700. The camera 1200 or cameras 1200 may be mounted or affixed to the robot 3300, may be stationary within the environment, and/or may be affixed to a dedicated robotic system separate from the robot 3300 used for object manipulation, such as a robotic arm, gantry, or other automated system configured for camera movement.

FIG. 3A shows an example having a stationary camera 1200 and an on-hand camera 1200, while FIG. 3B shows an example having only a stationary camera 1200. The 2D image information 2600 (e.g., a color image or a grayscale image) may describe an appearance of one or more objects, such as the objects 3100A/3100B/3100C/3100D or the layer divider 3600 in the camera field of view 3200. For instance, the 2D image information 2600 may capture or otherwise represent visual detail disposed on respective outer surfaces (e.g., top surfaces) of the objects 3100A/3100B/3100C/3100D and the layer divider 3600, and/or contours of those outer surfaces. In an embodiment, the 3D image information 2700 may describe a structure of one or more of the objects 3100A/3100B/3100C/3100D and the layer divider 3600, wherein the structure for an object may also be referred to as an object structure or physical structure for the object. In some examples, the 3D image information 2700 may describe the contours of the objects 3100A/3100B/3100C/3100D and the layer divider 3600 arranged on the pallet 3400. For example, the 3D image information 2700 may include a depth map, or more generally include depth information, which may describe respective depth values of various locations in the camera field of view 3200 relative to the camera 1200 or relative to some other reference point. The locations corresponding to the respective depth values may be locations (also referred to as physical locations) on various surfaces in the camera field of view 3200, such as locations on respective top surfaces of the objects 3100A/3100B/3100C/3100D and the layer divider 3600. In some instances, the 3D image information 2700 may include a point cloud, which may include a plurality of 3D coordinates that describe various locations on one or more outer surfaces of the objects 3100A/3100B/3100C/3100D and the layer divider 3600, or of some other objects in the camera field of view 3200. FIG. 2F illustrates an example of the point cloud.

In the example of FIGS. 3A and 3B, the robot 3300 (which may be an embodiment of the robot 1300) may include a robot arm 3320 having one end attached to a robot base 3310 and having another end that is attached to or is formed by an end effector apparatus 3330, such as a robot gripper. The robot base 3310 may be used for mounting the robot arm 3320, while the robot arm 3320, or more specifically the end effector apparatus 3330, may be used to interact with one or more objects in an environment of the robot 3300. The interaction (also referred to as robot interaction) may include, e.g., gripping or otherwise picking up at least one of the objects 3100A - 3100D and 3600. For example, the robot interaction may be part of an object picking operation to identify, detect, and retrieve the layer divider 3600 from a top surface 3120 of the layer of objects 3100A/3100B/3100C/3100D. The end effector apparatus 3330 may have suction cups or other components for grasping or gripping the layer divider 3600. The end effector apparatus 3330 may be configured, using a suction cup or other grasping component, to grasp or grab an object through contact with a single face or surface of the object, for example, via a top face.

The robot 3300 may further include additional sensors configured to obtain information used to implement the tasks, such as for manipulating the structural members and/or for transporting the robotic units. The sensors can include devices configured to detect or measure one or more physical properties of the robot 3300 (e.g., a state, a condition, and/or a location of one or more structural members/joints thereof) and/or of a surrounding environment. Some examples of the sensors can include accelerometers, gyroscopes, force sensors, strain gauges, tactile sensors, torque sensors, position encoders, etc.

FIG. 4A illustrates an example of a method 400 for detection, identification, and retrieval of a layer divider by a robotic system according to one or more embodiments. The operations of FIG. 4A may be performed in the sequence and manner as shown. However, the order of some operations may be changed, or some of the operations may be omitted, without departing from the spirit and scope of the shown example. Additionally, operations illustrated in FIG. 4A may be performed in parallel or simultaneously. One or more blocks of FIG. 4A, and combinations of the blocks, can be implemented by special purpose hardware-based computer that perform the specified functions, or combinations of special purpose hardware and instructions, e.g., computer or processor instructions. In addition to the description of FIG. 4A below, the descriptions of FIGS. 1-3B are also applicable to FIG. 4A and are incorporated herein.

In an image capture operation 410, the camera 1200 captures an image of a stack of objects disposed on a pallet. In an embodiment, the computing system 1100 (e.g., via object recognition module 1121) receives image information (which may also be referred to as a first set of image information) for representing at least a first portion of an object structure associated with an object in a field of view 3200 of a camera 1200 (also referred to as a camera field of view). For instance, FIG. 3A depicts a scenario in which a stack of objects 3700 is in a camera field of view 3200 of the camera 1200.

In some examples, the image information that is received by the computing system 1100 may be generated by the camera (e.g., 1200) when the camera is in or has a first camera pose, such as the camera pose illustrated in FIG. 3A. The camera pose may refer to a location and orientation of the camera (e.g., 1200). In some scenarios, the camera pose may affect a perspective or viewpoint of the camera (e.g., 3200). For example, the first camera pose depicted in FIG. 3A may involve the camera 1200 having a location that is above the stack of objects 3700 and having an orientation in which the camera 1200 is pointed at a first portion, or more specifically a top portion (e.g., top surface), of the objects 3100A/3100B/3100C/3100D. In some examples, the orientation for the first camera pose may be associated with the camera 1200 having a top view of the object. For instance, the first camera pose may involve the camera 1200 have an orientation in which its image sensor directly faces the top portion of the objects 3100A/3100B/3100C/3100D, and/or an orientation in which a focal axis of one or more lenses of the camera 1200 is vertical or substantially vertical.

In a contour operation 420, the computing system 1100 identifies a contour of the stack of objects 3700 based on information obtained from the image captured by the camera. The edge of the stack of objects 3700 may represent a boundary in the image having a sharp change in image brightness or image color. This change may be due to a discontinuity in the image intensity or a transition between different regions within the image. The edge may be generated by one or more of boundaries of objects, boundaries between objects, reflectance changes within an object, reflectance changes between objects, change in surface orientation within an object, and illumination changes (e.g., casting shadow boundaries). An edge of an image may be detected by one or more methods, such as, for example, Sobel operator, Canny operator, Prewitt operator, Roberts operator, and Gabor energy filters.

The contour of the object may refer to a curve joining all the continuous points along a boundary that have the same color or intensity. Contour detection methods may follow the edges identified in an image to find the curves, which may be continuous, that delineate object boundaries. Unlike edges, which are primarily concerned with areas of high contrast in an image, contours are focused on outlining the shapes and structures of objects within an image. A contour depicted in an image may be determined by the computing system 1100 converting an image of the stack of objects 3700 into a binary image, preprocessing the binary image to enhance edge features, and extracting the contour.

In an example process for determining the contour depicted in an image, the computing system 1100 may apply a filter to smooth the image. Gaussian blurring may be used for this purpose to reduce image noise without blurring the edges. Next, the computing system 1100 may determine the gradient of the image to highlight regions with high spatial frequency, which may correspond to edges. Any of the techniques discussed above, such as Sobel, Prewitt, or Canny edge detectors can be used to calculate the gradient magnitude and direction at each pixel. The computing system 1100 may further perform non-maximal suppression to thin out the edges. Here, pixels that are not on regions of high spatial frequency may be suppressed, leaving a thin line of pixels with high gradients. High spatial frequency areas may be areas where the image intensity changes abruptly over a small spatial distance, such as at the edges between different objects or between an object and the background. Next, the computing system 1100 may apply a threshold to the gradient image to identify edges. The threshold may be a simple binary threshold, adaptive thresholding, or the hysteresis thresholding used in the Canny edge detector, which differentiates between strong and weak edges based on two threshold values. The thresholds may be stored in the object registration module 1130. Once edges are identified, the computing system 1100 may link the edge pixels together to form contours, which may be continuous. Contour tracing algorithms, such as, for example, cv2.findContours function and cv2.drawContours function may be employed to follow the edges and outline the contours of the stack of objects 3700.

In some instances, additional processing by the computing system 1100 may be carried out to simplify the detected contours and to reduce complexity. For example, the computing system 1100 may apply methods such as Douglas-Peucker algorithm to reduce the number of points in a curve with a negligible deviation from the original contour. After the contour of the stack of objects 3700 is extracted, the feature extraction module 1134 may extract features like shape, size, orientation, or perform object recognition. The computing system 1100 may analyze the contour to extract features like shape, size, orientation, or to perform object recognition by comparing the contours against known shapes stored in the object registration module 1130. One or more of the steps for contour extraction and analysis may be enhanced or even bypassed by deploying neural networks trained for edge detection and/or contour extraction from an input image. The neural network may be a U-Net Convolutional Neural Network (CNN) architecture.

In some examples, as described above, the computing system 1100 identifies the edge and the contour of the stack of objects 3700 based on features extracted from the image by the feature extraction module 1134. The image may be a 3D image (and the image information may be 3D image information) and in other examples, the image may be a 2D image (and the image information may be 2D image information). The computing system 1100 (e.g., via object recognition module 1121) may generate, based on the image information, a contour of the objects (e.g., 3100A/3100B/31000C/3100D) and the layer divider 3600 disposed on the pallet 3400 in the camera field of view (e.g., 3200). The computing system 1100 may analyze the contour of the stack of objects 3700 to determine the structure information, such as shape, size, and orientation of the contour of the stack of objects 3700. The contour may be generated based on multiple sets of image information that all represent a top view of one or more objects in a camera field of view (e.g., 3200). The multiple sets of image information may be generated by the camera (e.g., 1200) at different respective locations (as the camera is moved laterally), but with the same or similar orientation for the camera, such as, for example, an orientation in which an image sensor of the camera directly faces a respective region on the top portion of the one or more objects (e.g., 3100A/3100B/31000C/3100D). In this example, the image information may be one of the multiple sets of image information. The image information may include a point cloud or depth map, which may be used by the object recognition module 1121 to identify the contour of the stack of objects 3700 in conjunction with the other modules of the computing system 1100.

The computing system 1100 may analyze the contour of the stack of objects 3700 to identify an edge associated with the contour of the stack of objects 3700. For instance, the edge may be an outer corner of the stack of objects 3700 in FIG. 3A. In some implementations, the computing system 1100 may identify the object corner based on the sensed structure information. For instance, the computing system 1100 may identify multiple outer edges described by the sensed structure information, or multiple edge regions described by the sensed structure information. In such an example, the computing system 1100 may identify the edge as a location which is at or near where the multiple outer edges intersect, and/or as a location which is in a region at which the multiple edge regions intersect. Identification of the edge and the contour of the stack of objects are discussed in more detail in U.S. Pat. No. 11,883,966 B2, the entire content of which is incorporated by reference herein.

In a surface identification operation 430, the computing system 1100 may identify a top surface of the stack of objects based on the contour of objects. The object recognition module 1121 may identify the top surface of the layer of objects based on the features extracted from the image by the feature extraction module 1134. The object recognition module 1121 may identify the top surface of the layer of objects 3700 based on analyzing the contour of the stack of objects 3700 to determine the uppermost boundary of the contour that represents the top surface. The uppermost boundary of the contour may refer to a line or surface that marks a limit of a horizontal plane that represents a highest surface of the stack of objects 3700.

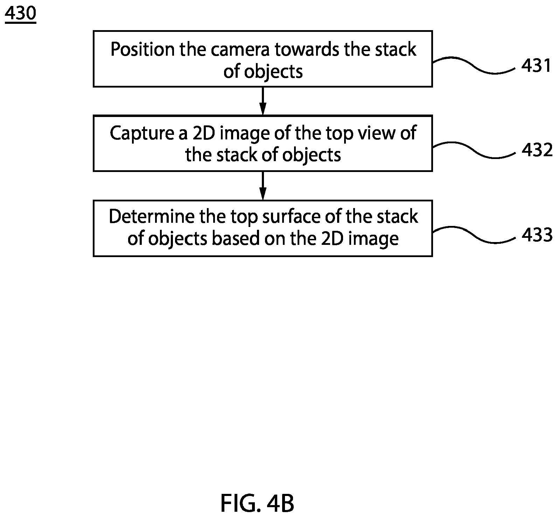

FIG. 4B illustrates the surface identification operation 430 for determining a top surface of a stack of objects by a robotic system according to one or more embodiments in greater detail. The operations of FIG. 4B may be performed in the sequence and manner as shown. However, the order of some operations may be changed, or some of the operations may be omitted, without departing from the spirit and scope of the shown example. Additionally, operations illustrated in FIG. 4B may be performed in parallel or simultaneously. One or more blocks of FIG. 4B, and combinations of the blocks, can be implemented by special purpose hardware-based computer that perform the specified functions, or combinations of special purpose hardware and instructions, e.g., computer or processor instructions. In addition to the description of FIG. 4B below, the descriptions of FIGS. 1-4A are also applicable to FIG. 4B and are incorporated herein.

In positioning operation 431, the computing system 1100 may generate instructions to position the camera 1200 towards the stack of objects 3700. The computing system 1100 causes the camera 1200 (e.g., via one or more camera placement movement commands) to be positioned to have a second camera pose in which the camera (e.g., 1200) is configured to capture an image of a top view of the stack of objects 3700 identified in the contour operation 420. The object recognition module 1121 may identify the top surface of the layer of objects 3700 based on analyzing the contour of the stack of objects 3700 to determine the uppermost boundary of the contour that represents the top surface.

In some examples, the second camera pose may be the same as the pose of the camera used to capture an image of the stack of objects 3700 in operation 410. In some examples, the second camera pose of operation 431 may be different than the camera pose associated with operation 410. As stated above, a camera pose may be a combination of a location and orientation of a camera (e.g., 1200).

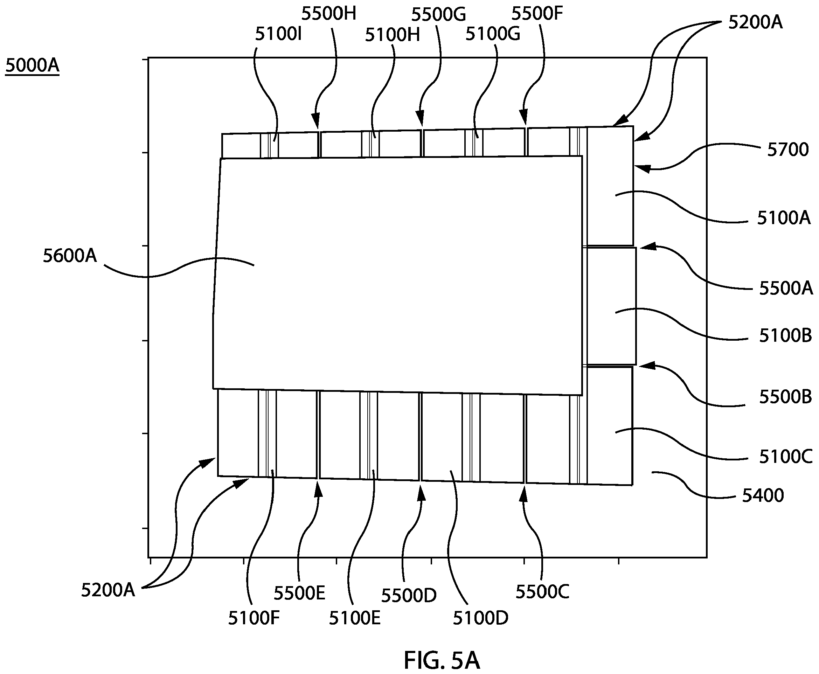

In a capture operation 432, the camera (e.g., 1200) may capture a 2D image of a top view of the stack of objects 3700. When the camera 1200 has the second camera pose, a top surface of the stack of objects 3700 may come within the camera field of view 3200 of the camera 1200, and may be within the line of sight of the image sensor of the camera 1200. FIG. 5A illustrates an example of a 2D image 5000A of a top surface of a stack of objects, which will be further described below. In other embodiments, in the capture operation 432, the camera (e.g., 1200) may also capture a 3D image of a top view of the stack of objects 3700.

In a top surface determination operation 433, the computing system 1100 may determine the top surface of the stack of objects 3700 based on the 2D image captured in operation 432. The top surface of the stack of objects 3700 may represent a horizontal plane that represents the highest surface of the stack of objects 3700. The top surface of the stack of objects 3700 may be determined or identified by image segmentation or edge detection, as described above, of the image captured in the capture operation 432. The perimeter of the top surface of the stack of objects 3700 may be defined by the borders 5200A of the top view of objects 5100A - 5100I, illustrated in FIG. 5A. The computing system 1100 may determine a perimeter of the top surface of the stack of objects 3700 depicting the outer boundary of the stack of objects based on an edge detection method, as described above. In some embodiments, the vertical height of the top surface of stack of objects 3700 from the pallet 3400 may be determined by a sensor or image segmentation or edge detection, as described above.

Returning now to FIG. 4A, in an extension line detection operation 440, the computing system 1100 may detect extension lines extending from the perimeter of the top surface towards a center of the top surface based on the image information of the top surface of the stack of objects. Each of the extension lines may correspond to at least one of an edge of an object or a gap between objects of the stack of objects in the image. As illustrated in FIG. 5A, the extension line 5500A may correspond to an edge, which is detected in the image information of the image of the top surface of the stack of objects 3700, and which represents a gap between objects 5100A and 5100B in the image information. As described below, the progression of the extension lines from the perimeter towards the center of the top surface of the stack of objects 3700 is restricted (or hidden from the line of sight of the image sensor of the camera 1200) by the layer divider 5600A disposed on the objects 5100A - 5100I. Further details regarding the detection of the extension lines between objects are provided below with reference to FIGS. 5A-5C. In another embodiment, when a layer divider is not present between layers of objects, the extensions lines may trace a contour of a surface of all the objects disposed on the top surface of the stack of objects. In other words, when a layer divider is not present between layers of objects, the extension lines may not terminate, but may define a shape of a top surface of the objects 5100A - 5100I.

FIG. 5A illustrates an example of a 2D image 5000A of a top surface of a stack of objects, such as objects 5100A - 5100I that are arranged on a pallet 5400. A layer divider 5600A may be disposed on a top surface of the objects 5100A - 5100I. The layer divider 5600A may cover all or a portion of the top surface of the objects 5100A - 5100I. As described above, an image segmentation, edge detection, or other processing operation may be performed to identify the objects 5100A - 5100I, borders 5200A of the top view of obj ects 5100A - 5100I, and the extension lines 5500A/5500B/5500C/5500D/5500E/5500F/5500G/5500H (that represent gaps between objects in the image 5000A) that extend inwards from the respective border (and substantially perpendicular to the respective borders, e.g., within 10%, within 5%, within 2%, or within 1% of perpendicularity with the respective border) towards a central portion of the of the 2D image 5000A. The borders 5200A define the border of the outer edges of the objects 5100A - 51001, which are disposed on the pallet 5400. As illustrated in FIG. 5A, extension lines 5500A and 5500B extend inwards from a right-side border 5200A of the 2D image 5000A, extension lines 5500C, 5500D, and 5500E extend inwards from a bottom-side border 5200A of the 2D image 5000A, and extension lines 5500F, 5500G, and 5500H extend inwards from a top-side border 5200A of the 2D image 5000A.

The computing system 1100 may determine the extension lines 5500A/5500B/5500C/5500D/5500E/5500F/5500G/5500H, which start from the borders 5200A and progress towards a central portion of the 2D image 5000A based on an image segmentation, edge detection, or other processing operation as described above.. The borders 5200A may enclose a detection area 5700 of the image that includes the objects 5100A - 5100I, extension lines 5500A/5500B/5500C/5500D/5500E/5500F/5500G/5500H, and the layer divider 5600A.

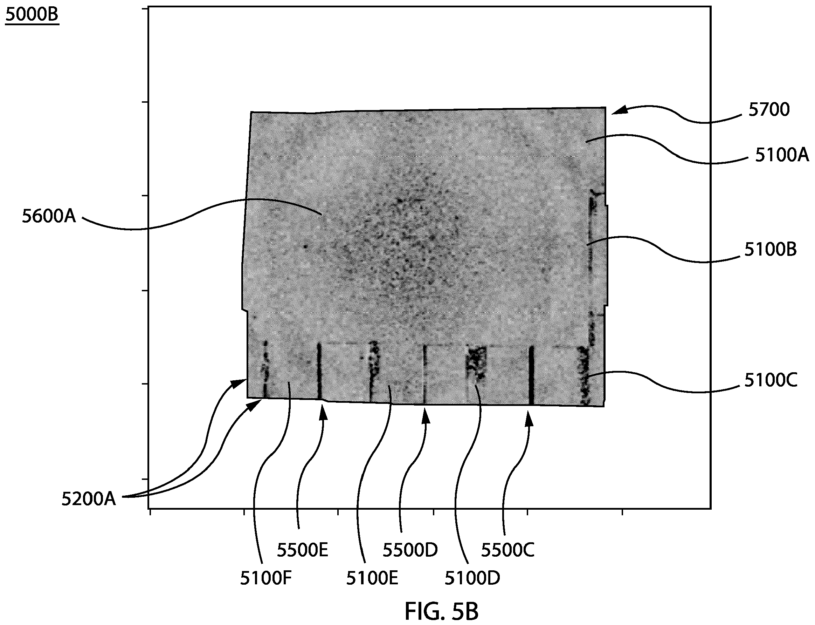

FIG. 5B illustrates an example of a 3D image 5000B of a top surface of a stack of objects. FIG. 5B illustrates an example of a top view of objects, such as objects 5100A - 5100I that are arranged on a pallet. A layer divider 5600A may be disposed on a top surface of the objects 5100A - 5100I. As described with reference to above, an image segmentation, edge deduction, or other processing operation may be performed on the depth maps or the point cloud data to identify the objects 5100A - 5100I, borders 5200A of the top view of objects 5100A - 5100I, the extension lines 5500C/5500D/5500E (that represent gaps between objects 5100A - 5100I in the image 5000B) that extend from the respective border (and substantially perpendicular to the respective borders, e.g., within 10%, within 5%, within 2%, or within 1% of perpendicularity with the respective border) towards a central portion of the 3D image 5000B, and the detection area 5700 of the image. For example, the computing system 1100 may determine the extension lines 5500C/5500D/5500E, which start from the borders 5200A and progress towards a central portion of the 3D image 5000B. The borders 5200A define the border of the outer edges of the objects 5100A - 5100I, which are disposed on the pallet 5400. The extension lines 5500C/5500D/5500E and the borders 5200A may be determined based on changes in depth information of adjacent 3D points in the 3D image or a change in depth gradients. As described above, the spatial depth information in the 3D images may be analyzed to detect edges based on discontinuities or significant changes in depth. These edges that are detected may be analyzed to determine the extension lines 5500C/5500D/5500E (that represent gaps between objects in the image 5000A).

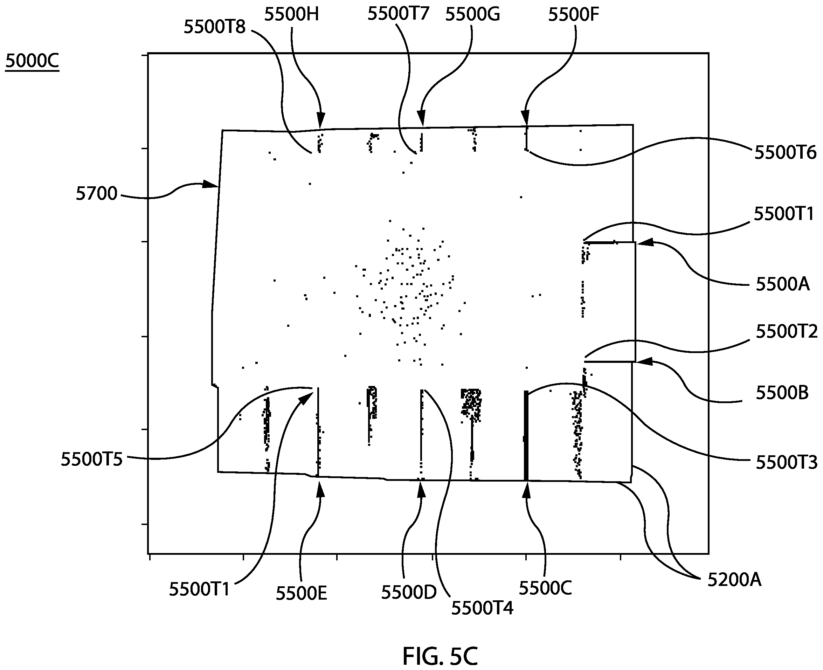

Returning now to FIG. 4, in layer divider detection operation 450, the computing system 1100 may measure a length of the extension lines detected in extension line detection operation 440. The computing system 1100 may detect a presence of a layer divider 3600 disposed on the top surface 3120 of the layer of objects based on (*e.g.* in response to) the length of each of the extension lines being less than a first threshold, *i.e.,* a line-length threshold. In some examples, the dimension of the objects in the stack of objects and the threshold may be stored in the object registration module 1130. In some examples, the line-length threshold may correspond to a length of the smallest side of any of the objects 5100A - 5100I. The line-length threshold may be retrieved by the computing system 1100 and compared to the measured length. When the length of each of the extension lines is less than the line-length threshold, the computing system 1100 may detect a presence of the layer divider. When the length of each of the extension lines, which represent gaps between objects 5100A - 5100I in the image 5000A, is less than the length of the smallest side of the object 5100A - 5100I, then it may indicate that some portion of the image of the objects is being obstructed by the presence of another object, which may be the layer divider 5600A. The line length measurement process may be further understood with reference to FIG. 5C.

FIG. 5C illustrates an example of the extension lines and the edges of the detection area that are identified based on either the 2D image and method illustrated in FIG. 5A or the 3D image and the method illustrated in FIG. 5B. FIG. 5C illustrates borders 5200A, and extension lines 5500A/5500B/5500C/5500D/5500E/5500F/5500G/5500H that were determined either using the 2D image of FIG. 5A or 3D image or point cloud data of FIG. 5B in the detection area 5700 of the image 5000C. The computing system 1100 may determine a termination point of each of the extension line 5500A/5500B/5500C/5500D/5500E/5500F/5500G/5500H to be 5500T1/5500T2/5500T3/5500T4/5500T5/5500T6/5500T7/5500T8, respectively, based on image segmentation, edge detection, or other processing operation discussed above. The termination points 5500T1/5500T2/5500T3/5500T4/5500T5/5500T6/5500T7/5500T8 are distal to the perimeter of the top surface defined by the border 5200A. The termination points 5500T1/5500T2/5500T3/5500T4/5500T5/5500T6/5500T7/5500T8 of the extension line 5500A/5500B/5500C/5500D/5500E/5500F/5500G/5500H indicates that some object, *i.e.,* the layer divider 5600A, is obstructing the extension lines 5500A/5500B/5500C/5500D/5500E/5500F/5500G/5500H, which extends from their respective borders 5200A. Thus, the termination points 5500T1/5500T2/5500T3/5500T4/5500T5/5500T6/5500T7/5500T8 may indicate that the layer divider is disposed on top of the objects 5100A - 5100I, and tracing the termination points may provide a contour of the layer divider 5600A.

The computing system 1100 may determine a length of each of the extension lines 5500A/5500B/5500C/5500D/5500E/5500F/5500G/5500H based on based on image segmentation, edge detection, or other processing operation discussed above. In some examples, the length of each respective line may be determined based on a length of a shortest line from a termination point of the line to a border 5200A of the detection area 5700 from which the respective line extends.

In some examples, the computing system 1100 may be further configured to detect the presence of the layer divider 3600 based on none of the extension lines extending from the perimeter of the top surface 3120 to the center of the top surface 3120 of the stack of objects 3700. When none of the extension lines extend from the perimeter of the top surface 3120 to the center of the top surface 3120 of the stack of objects 3700, then it may indicate that some portion of the image of the objects 5100A - 5100I is being obstructed by the presence of another object, which may be the layer divider 5600A. In some examples, the line-length threshold may be less than half a length of a smallest side of a quadrilateral defining the top surface 3120 of the stack of objects 3700. In some examples, the line-length threshold may be less than quarter of the length of the smallest side of the quadrilateral defining the top surface 3120 of the stack of objects 3700. In some examples, the line-length threshold may be half of a length of a side of the quadrilateral defining the top surface 3120 of the stack of objects 3700. In some examples, the line-length threshold may be a predefined number, which is stored in the object registration module 1130. The predefined number may be based on the environment for operating a robotic system, and the objects that the robotic system is configured to handle. The predefined line-length threshold may be selectively adjusted based on a change of the size of objects that the robotic system may handle or process.

In a validation operation 460, the computing system 1100 may validate a presence of the layer divider based on one or more of a surface area of the layer divider, a thickness of the layer divider, a weight of the layer divider, a smoothness of the layer divider, or a texture artifact. In some examples, operation 460 may be selectively performed. In some examples, the contour of the layer divider may be identified after the presence of the layer divider has been validated. In some examples, validation may be performed after the contour of the layer divider has been identified.

FIG. 7 illustrates examples of methods for validating the presence of a layer divider that is disposed between layers of obj ects or atop a layer of obj ects. One or more blocks of FIG. 7, and combinations of the blocks, can be implemented by special purpose hardware-based computer that perform the specified functions, or combinations of special purpose hardware and instructions, e.g., computer or processor instructions. For example, one or more of the operations of FIG. 7 may be performed by the validation module 1138 of the computing system 1100C. The order of some operations of FIG. 4A may be changed, or some of the operations may be omitted, without departing from the spirit and scope of the shown example. In addition to the description of FIG. 7 below, the descriptions of FIGS. 1-6B are also applicable to FIG. 7 and are incorporated herein.

In a surface area minimum threshold operation 461, the validation module 1138 of the computing system 1100C may determine a surface area of the contour of the layer divider, when (*e.g.* in response to) the presence of a layer divider has been detected. The computing system 1100C may determine the surface area of the contour of the layer divider 5600A by calculating the area enclosed by the contour that defines the borders of the layer divider 5600A. If the contour of the layer divider 5600A defines a standard geometric shape (such as a rectangle, a circle, or a triangle), the surface area may be determined by applying a standard geometric formula, such as, multiply the length by the width for a rectangle/square, apply the formula πr² where r is the radius of a circle, determine the area of a triangle based on multiplying the ½ x base x height or applying Heron's formula if all the sides of the triangle are known.

For non-standard shapes of the layer divider 5600A, the surface area can be determined by breaking down the shape into smaller, manageable segments (like triangles) or by using numerical methods. For example, the computing system 1100C may divide the area enclosed by the contour of the layer divider 5600A into triangles by selecting a point inside (or outside) the contour of the layer divider 5600A as a reference and connecting it to the vertices of the contour, effectively triangulating the interior of the contour of the layer divider 5600A. The computing system 1100C may calculate an area of each triangle by the formula described above and these areas may be summed up to obtain the area of the contour of the layer divider 5600. In another example, the computing system 1100C may determine the surface area of the contour of the layer divider 5600A that may be represented as a polygon, using the shoelace formula (also known as Gauss's area formula).

In other examples, the surface area the computing system 1100C may be extracted from digital images using libraries, such as OpenCV, that provide functions, such as contourArea function, which may directly calculate the area enclosed by a contour.

The computing system 1100C may compare the surface area of the contour of the layer separator to a surface-area minimum threshold, which is stored in the object registration module 1130. The computing system 1100C may validate the presence of the layer divider based on whether (*e*.*g*., in response to) the surface area of the contour of the layer divider is greater than the surface-area minimum threshold. If the surface area of the contour of the potentially detected layer divider is sufficiently large, it may be considered to be an accurate detection, e.g., to be validated.

In some examples, the surface-area minimum threshold may be equal to or greater than a surface area of a smallest side of the smallest object that is handled in an operating environment. The surface-area minimum threshold may be equal to or greater than a surface area of a smallest side of the smallest object in the stack of objects. The surface-area minimum threshold may be equal to a surface area of a largest object in the stack of objects. In some examples, the surface-area minimum threshold may be equal to a surface area of a largest side of a largest object in the stack of objects. In some examples, the surface-area minimum threshold is a predefined number, which is stored in the object registration module 1130. The predefined number may be based on the environment for operating a robotic system, and the objects that the robotic system is configured to handle. In some examples, the predefined number may vary based on the type and size of objects or the type or size of items that are contained in the objects.

In a surface area maximum threshold operation 462, the validation module 1138 of the computing system 1100C may determine a surface area of the contour of the layer divider, after the presence of (e.g. in response to) a layer divider is detected. The surface area of the contour of the layer divider may be determined as described above with reference to the determination of the surface area for the surface area minimum threshold operation 461. The surface area may be compared to a surface-area maximum threshold which is stored in the object registration module 1130. The computing system 1100C may validate the presence of the layer divider based on whether (*e*.*g*. in response to) the surface area of the contour of the layer divider is less than the surface-area maximum threshold. If the surface area of the contour of the potentially detected layer divider is sufficiently small, it may be considered to be an accurate detection, e.g., to be validated.

In some examples, the surface-area maximum threshold may be equal to a surface area of a pallet on which the stack of objects is disposed. In some examples, the surface-area maximum threshold is a predefined number, which is stored in the object registration module 1130. In some examples, the predefined number may vary based on the environment that the objects are stored or located. Based on the environment for operating the robotic system, and the objects that the robotic system is configured to handle the predefined surface-area maximum threshold may be obtained by a multiplication of the size of the sides of the pallet. In some examples, the size of the pallet may be any one of 45.9" x 45.9", 48" x 40", 47.2" x 31.5", 47.2" x 39.4", 47.2" x 31.5", 44.9" x 44.9", 43.3" x 43.3", 39.4" x 47.2", 31.5" x 23.6", 24" x 20", 20" x 24", or any other size that is suitable for use in the environment for operating a robotic system.

In a layer divider thickness operation 463, the validation module 1138 of the computing system 1100C may determine a thickness of the layer divider based on the 3D image information, when the presence of the layer divider is detected. In some examples, the contour of the layer divider may be identified after the presence of the layer divider has been validated based on the layer divider thickness operation 463. In other examples, layer divider thickness operation 463 may validate the presence of the layer divider after the contour of the layer divider has been identified. In some examples, the computing system 1100C may determine the thickness of the layer divider based on changes in depth information of adjacent 3D points in a 3D image or a change in depth gradients between the layer divider indicated by the contour of the layer divider and a top surface of the stack of objects. The computing system 1100C may validate the presence of the layer divider based on whether (e.g. in response to) the thickness of the layer divider indicated by the contour of the layer divider is less than a thickness threshold. In some examples, the thickness threshold is a predefined number, which is stored in the object registration module 1130. As described above, the layer divider may be made of many different materials, such as, for example, a corrugated fiberboard, a corrugated sheet, and cardstock. The predefined thickness threshold may vary based on the material of the layer divider. For example, when the layer divider is made of corrugated fiberboard, the predefined thickness threshold may vary from 3 mm to 15 mm depending on whether the corrugated fiberboard is single walled, double walled or triple walled. When the layer divider is made of paper board, the predefined thickness threshold may vary from 0.2mm to 1mm, and when the layer divider is made of cardstock, the predefined thickness threshold may vary from 0.25mm to 0.8mm.

In layer divider weight operation 464, the validation module 1138 of the computing system 1100C may determine a weight of the layer divider based on sensor information, when the presence of the layer divider is detected. In some examples, the contour of the layer divider may be identified after the presence of the layer divider has been validated based on the layer divider weight operation 464. In other examples, layer divider weight operation 464 may validate the presence of the layer divider after the contour of the layer divider has been identified. The computing system 1100C may validate the presence of the layer divider based on whether (*e*.*g*. in response to) the weight of the layer divider is less than a weight threshold. In some examples, the weight threshold is a predefined number, which is stored in the object registration module 1130. The predefined weight threshold may vary based on the material of the layer divider and the anticipated size of the layer divider. For example, the predefined weight threshold may be greater for triple walled corrugated fiberboard than for double walled triple walled, and the predefined weight threshold may be greater for single walled corrugated fiberboard than either paper board or cardstock. The anticipated size of the layer divider may depend on the sizes of the objects that the robotic system is configured to handle. In some examples, the weight threshold may be approximately two and a half (2.5) kilograms. In other examples, the weight threshold may vary from 100 grams to 2500 grams based on the environment for operating the robotic system, and the objects that the robotic system is configured to handle.

In a layer divider smoothness operation 465, the validation module 1138 of the computing system 1100C may measure a smoothness of the layer divider and compare the measured smoothness to a smoothness threshold to validate the identified layer divider. If the measured smoothness is lesser than the smoothness threshold, *i*.*e*., the layer divider is rougher than the smoothness threshold, it may be determined that the identified object is not a layer divider, e.g., it may be invalidated.

In an example, smoothness measured by analyzing z-values among the points in a point cloud representing the layer divider 5600A may be compared to a z-value smoothness threshold. Validation against the z-value smoothness threshold may performed in multiple ways. The validation module 1138 may extract z-coordinates (heights) of the points. The z-values may represent the elevation or depth of the points in the point cloud from an imaging device, such as the camera 1200. Then, the validation module 1138 may identify a nearest neighbors of each point using data structures, such as KDTree. The validation module 1138 may determine the local z-variations by calculating the standard deviation of the differences between each point's z-value and the z-values of its neighbors. The validation module 1138 may analyze the mean and standard deviation of these local z-variations to quantify surface smoothness, with a lower standard deviation indicating a smoother surface of the layer divider 5600A. The surface smoothness may be compared the z-value smoothness threshold to validate or invalidate the identified layer divider.

In an example, the validation module 1138 may analyze the range and distribution of the depth values, *i*.*e*., z-values, to identify variations. The variations may be compared to a z-value smoothness threshold to validate or invalidate the identified layer divider.

In another example, the computing system 1100C may determine that the object is not a layer divider when (*i*.*e*. in response to) the depth variation between a point and its neighboring point is greater than a z-value smoothness threshold.

In another example, the computing system 1100C may segment the point cloud into clusters with similar depths to examine depth variations within and between these clusters. The computing system 1100C may determine that the object is not a layer divider when (*i.e*. in response to) the depth variation is greater than a z-value smoothness threshold.

In an example, exceeding a z-value smoothness threshold of approximately 5mm, 6mm, or greater may be considered to invalidate the object as a potential layer divider. In another, the computing system 1100C may determine that the object is not a layer divider when (*i.e.* in response to) the depth variation is greater than the z-value smoothness threshold for between 5% and 12%, between 7% and 9%, or about 8% of the surface area of the object (e.g., identified as a potential layer divider) representing the point cloud.

In other examples, the computing system 1100C may measure the smoothness of the layer divider based on sensors, such as, for example, an optical profilometers, which uses light to measure surface topography. These optical profilometers may project a beam of light onto the surface of the layer divider and analyze the reflected light to determine surface features and determine the smoothness of the layer divider. The smoothness of the layer divider may be expressed in terms of Arithmetic Average Roughness (Ra), which is a measurement of the average surface roughness of a material. Ra is the average deviation of the surface peaks and valleys from the mean line, measured over a specified length. The computing system 1100C may validate the presence of the layer divider based on whether (e.g. in response to) the smoothness is greater than a smoothness threshold. In some examples, the smoothness threshold is a predefined number, which is stored in the object registration module 1130. The predefined smoothness threshold may vary based on the material of the layer divider, such as a corrugated fiberboard, a paper board, and a cardstock.

In some examples, the computing system 1100C may determine the object is a layer divider based on comparison with either or both of the measured smoothness threshold and the z-value smoothness threshold, which may be different thresholds. The computing system 1100C may determine that the objects is a layer divider when (*i.e.* in response to) both the respective thresholds are satisfied.

In some examples, the contour of the layer divider may be identified after the presence of the layer divider has been validated based on the layer divider smoothness operation 465. In some examples, the contour of the layer divider may be identified after the layer divider smoothness operation 465 has validated the presence of the layer. In other examples, layer divider smoothness operation 465 may validate the presence of the layer divider after the contour of the layer divider has been identified.

In a layer divider texture operation 466, the feature extraction module 1134 of the computing system 1100C may generate image features based on the 2D image information and the 3D image information corresponding to an upper surface of the layer divider. In some examples, the contour of the layer divider may be identified after the presence of the layer divider has been validated based on the layer divider texture operation 466. In other examples, layer divider texture operation 466 may validate the presence of the layer divider after the contour of the layer divider has been identified. In some examples, the validation module 1138 may interact with the feature extraction module 1134 to identify a texture artifact based on the image features. The computing system 1100C may validate the presence of the layer divider based on whether (*e*.*g*. in response to) a texture artifact is identified in the image information. The computing system 1100C may determine that the presence of the layer divider is a false positive when (*e.g.* in response to) a texture artifact is identified in the image information. In some examples, the texture artifact comprises any one or any combination of a logo, a graphic, a tag, a label, a marking, a scan code, a Universal Product Code ("UPC"), packing tape, visual patterns, and a high spatial frequency area in the image information. High spatial frequency areas may be areas where the image intensity changes abruptly over a small spatial distance, such as between an object and the background, or between a plain background of a packing box and textual or pictural artifact. The computing system 1100C may validate that the presence of the layer divider when (*e.g.* in response to) a texture artifact is not identified in the image information.

Returning now to FIG. 4A, in a contour identification operation 470, the computing system 1100 may identify a contour of the layer divider according to points on the top surface corresponding to termination points of the extension lines.

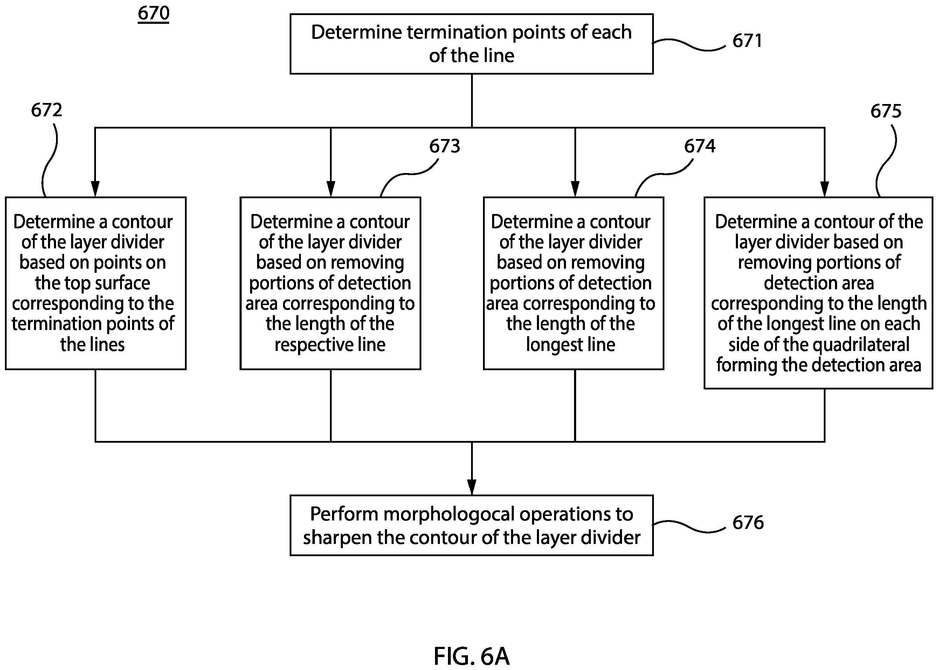

FIG. 6A illustrates an example of a method 670 for determining contour of the layer divider according to one or more embodiments. The operations of FIG. 6A may be performed in the sequence and manner as shown. However, the order of some operations may be changed, or some of the operations may be omitted, without departing from the spirit and scope of the shown example. Additionally, operations illustrated in FIG. 6A may be performed in parallel or simultaneously. One or more blocks of FIG. 6A, and combinations of the blocks, can be implemented by special purpose hardware-based computer that perform the specified functions, or combinations of special purpose hardware and instructions, e.g., computer or processor instructions. In addition to the description of FIG. 6A below, the descriptions of FIGS. 1-5C are also applicable to FIG. 6A and are incorporated herein.

In a termination point determination operation 671 the computing system 1100 may determine termination points of each of the extension lines 5500A/5500B/5500C/5500D/5500E/5500F/5500G/5500H to be 5500T1/5500T2/5500T3/5500T4/5500T5/5500T6/5500T7, respectively. The termination points 5500T1/5500T2/5500T3/5500T4/5500T5/5500T6/5500T7 are illustrated in FIG. 5C and described above with reference to FIG. 5C. The termination points 5500T1/5500T2/5500T3/5500T4/5500T5/5500T6/5500T7/5500T8 of the extension line indicates that some object, *i.e.,* the layer divider 5600A, is obstructing the extension lines 5500A/5500B/5500C/5500D/5500E/5500F/5500G/5500H, which extends from their respective borders 5200A. Thus, the termination points 5500T1/5500T2/5500T3/5500T4/5500T5/5500T6/5500T7/5500T8 may indicate that the layer divider is disposed on top of the objects 5100A - 5100I, and tracing the termination points may provide a contour of the layer divider 5600A.

In a top surface correspondence operation 672, the computing system 1100 may determine a contour of the layer divider based on points on the top surface corresponding to the termination points of the extension lines 5500T1/5500T2/5500T3/5500T4/5500T5/5500T6/5500T7. In an example, the contour of the layer divider may be based on connecting the termination points of the extension lines 5500T1/5500T2/5500T3/5500T4/5500T5/5500T6/5500T7.

In another example, the contour of the layer divider may be based on the termination points of the extension lines 5500T1/5500T2/5500T3/5500T4/5500T5/5500T6/5500T7 and an image segmentation or other processing operation on a 2D image of a top view of objects, such as objects 5100A - S 100I that are arranged on a pallet. During image segmentation, computing system 1100 may identify objects, such as objects 5100A - S 100I, layer divider 5600A, borders 5200A, within the 2D image of a top view based on criteria, such as color, intensity, or texture of the image. The computing system 1100 may trace the contour of the layer divider based on the terminating points and the objects from the image segmentation operation. If the computing system 1100 encounters a border 5200A element when tracing the contour, computing system 1100 may acknowledge that a boundary of the detection area 5700 has been reached, prompting it to cease contour tracing towards the border 5200 of the detection area 5700. In another example, the contour of the layer divider may be based on the termination points of the extension lines 5500T1/5500T2/5500T3/5500T4/5500T5/5500T6/5500T7 and based on changes in depth information of adjacent 3D points in the 3D image or a change in depth gradients of a top view of objects, such as objects 5100A - 5100I that are arranged on a pallet. Like the examples described for image segmentation, the change in depth information may identify objects in the image, which in turn may assist the computing system 1100 to trace the contour of the layer divider.

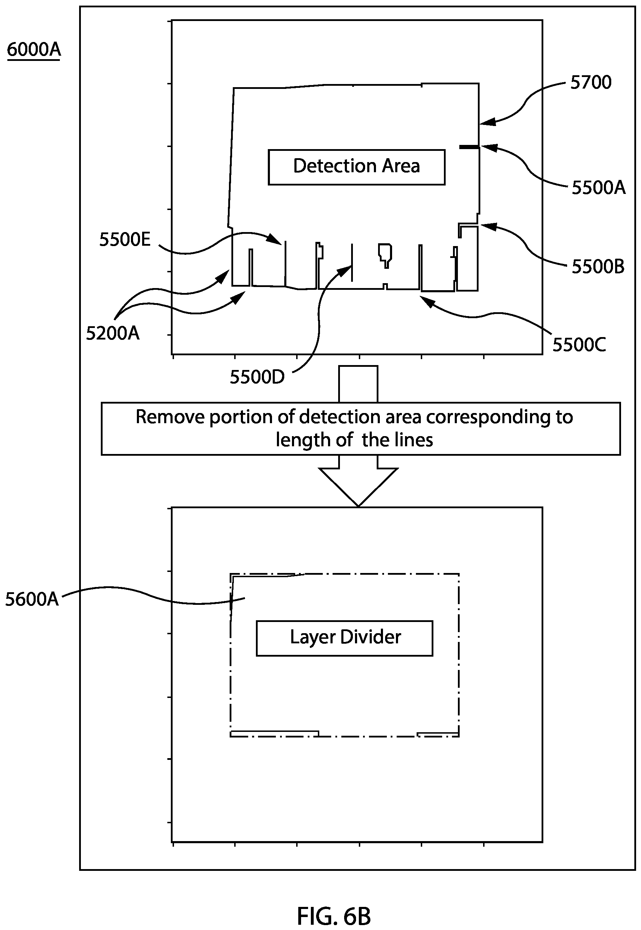

In a detection area portion removal operation 673, the computing system 1100 may determine a contour of the layer divider by filtering out portions of detection area 5700 corresponding to the length of the respective extension line 5500A/5500B/5500C/5500D/5500E/5500F/5500G/5500H, which may be determined, as described above. In one example, the computing system 1100 may identify the contour of the layer divider based on eliminating portions of 2D image information of the top surface of the stack of objects from the perimeter to the termination points of each of the extension lines 5500T1/5500T2/5500T3/5500T4/5500T5/5500T6/5500T7. The operation of removing a portion of the detection area corresponding to the length of the respective extension line 5500A/5500B/5500C/5500D/5500E/5500F/5500G/5500H is illustrated in FIG. 6B.

In a detection area portion removal operation 674, the computing system 1100 may determine a longest extension line (Ext Line_{long}) of the extension lines 5500A/5500B/5500C/5500D/5500E/5500F/5500G/5500H. The computing system 1100 may determine a contour of the layer divider by filtering out portions of detection area 5700 corresponding to a length of the longest extension line (Ext Line_{long}). The computing system 1100 may identify the contour of the layer divider based on eliminating (or filtering out) portions of 2D image information of the top surface of the stack of objects from the perimeter of the detection area 5700 up to a distance corresponding to the length of the longest extension line (Ext Line_{long}) on each side of the quadrilateral forming the detection area 5700.

In a detection area portion removal operation 675, the computing system 1100 may determine the longest extension line (Ext Line_{long}) for each side of the quadrilateral forming the detection area 5700. In the example of FIG. 5C, the computing system 1100 may determine a first longest extension line (1^{st} Ext Line_{long}) from among extension lines 5500A/5500B on the right-hand side of the quadrilateral forming the detection area 5700. The computing system 1100 may determine a second longest extension line (2^{nd} Ext Line_{long}) from among extension lines 5500C/5500D/5500E on the bottom side of the quadrilateral forming the detection area 5700. The computing system 1100 may determine a third longest extension line (3^{rd} Ext Line_{long}) from among extension lines 5500F/5500G/5500H on the top side of the quadrilateral forming the detection area 5700. Since the left-hand side of the quadrilateral forming the detection area 5700 does not have any extension lines, such an operation may not be performed on the fourth side of the quadrilateral. In some examples, there will be no extension lines on the fourth side of the quadrilateral because the layer divide5600A may extend all the way to the perimeter of the fourth side.

The computing system 1100 may determine a contour of the layer divider by eliminating (or filtering out) portions of detection area 5700 on each side of the quadrilateral forming the detection area 5700 corresponding to a length of the longest extension line on the respective side. For example, the computing system 1100 may determine a contour of the layer divider by eliminating (or filtering out) portions of detection area 5700 equal to a length of the first longest extension line (1^{st} Ext Line_{long}) from the right-hand side of the quadrilateral forming the detection area 5700, filtering out portions of detection area 5700 equal to a length of the second longest extension line (2^{nd} Ext Line_{long}) from the bottom side of the quadrilateral forming the detection area 5700, and filtering out portions of detection area 5700 equal to a length of the third longest extension line (3^{rd} Ext Line_{long}) from the top side of the quadrilateral forming the detection area 5700. Since extensions lines are not detected on the left-hand side of the quadrilateral forming the detection area 5700, the computing system 1100 may determine that the detection area 5700 extends to the perimeter of the quadrilateral forming the detection area 5700 and no elimination (or filtering out) is needed.

In another example, if extensions lines are not detected on the left-hand side of the of the quadrilateral forming the detection area 5700, the computing system 1100 may select the longest extension line of the 1^{st} Ext Line_{long}, the 2^{nd} Ext Line_{long}, and the 3^{rd} Ext Line_{long} to ensure against the risk of image processing failure. If the image processing fails to detect extension lines on the left-hand side of the quadrilateral forming the detection area 5700, the contours of the layer divider may be determined to be larger than the actual layer divider, leading to potential accidents when the robot tries to pick or remove the layer divider from the stack of objects. Therefore, out of an abundance of caution and to avoid accidents, when extension lines are not detected on the left-hand side of the quadrilateral forming the detection area 5700, the computing system 1100 may eliminate (or filter out) portions of the detection area 5700 corresponding to the length of the longest extension line from the left-hand side of the quadrilateral forming the detection area 5700. This is done because if the contours of the layer divider is determined to be bigger than the actual layer divider accidents might happen when the robot tries to pick or remove the layer divider from the stack of objects. The computing system 1100 may eliminate (or filter out) portions of detection area 5700 corresponding to a length of the longest extension line from the left-hand of the quadrilateral forming the detection area 5700.

The top portion of FIG. 6B illustrates the detection area 5700 bounded by the borders 5200A, and the extension lines 5500A/5500B/5500C/5500D/5500E, which start from the borders 5200A and progress towards a center of the 2D image 6000A, disposed in the detection area 5700. The bottom portion of FIG, 6B illustrates a contour of the layer divider 5600A that is obtained by removing portions of detection area 5700 corresponding to a length of the longest extension line (Ext Line_{long}) of the extension lines 5500A/5500B/5500C/5500D/5500E/5500F/5500G from each side of the quadrilateral forming the detection area 5700, as described above for operation 674.

After the contour of the layer divider is determined, in a contour sharpening operation 676, the computing system 1100 may perform morphological operations to sharpen the identified contour of the layer divider. In some examples, the morphological operations are based on a square structural element having a length of a side equal to a length of a largest extension line of the extension lines 5500A/5500B/5500C/5500D/5500E/5500F/5500G/5500H. The morphological operations may include an erosion operation based on sliding the structuring element over the layer divider and retaining a minimum pixel value covered by the structuring element. Erosion is a morphological operation that removes pixels on object boundaries in an image, effectively shrinking the objects. It works by sliding a structuring element over the image and retaining a pixel at its origin only if all pixels under the structuring element match the element, leading to thinner objects and the elimination of small protrusions. Erosion erodes the boundaries of the foreground (typically white) objects in the image.

The morphological operations may include a dilation operation based on sliding the structuring element over the layer divider and retaining a maximum pixel value covered by the structuring element. Dilation adds pixels to the boundaries of objects in an image. The structuring element is slid over the image, and if any pixel under the structuring element is 1, the pixel at the origin is set to 1. Dilation is used to accentuate features and close small holes or gaps in objects.

In some examples, the morphological operations may include the erosion operation followed by the dilation operation. In some examples, morphological operations may include performing the dilation operation followed by the erosion operation.

In a trajectory determination operation 480, when (*e.g.* in response to) the computing system 1100 determines a contour of the layer divider, the object manipulation planning module 1126 of the computing system 1100 may determine a trajectory to control a movement of the robot arm of the robot 1300 or the robot 3300 based on the contour of the layer divider. For example, the object manipulation planning module 1126 may configure a robot 3300 to grasp and remove the layer divider 3600 from the top surface 3120 of the objects 3100A/3100B/3100C/3100D based on the trajectory. In some examples, the trajectory configures the robot arm 330 to grasp and remove the layer divider 3600 from above the stack of objects 3700 using the end effector apparatus 3330. In some examples, the trajectory configures a gripper of the end effector apparatus 3330 to grasp the layer divider 3600.

FIG. 8 illustrates an example of an environment where two layers 3710 and 3720 of objects 3100A/3100B/3100C/3100D/3100E/3100F/3100G/3100H stacked on a pallet 3400 with a layer divider 3600 disposed on a top surface of the second layer. The first layer 3710 includes objects 3100A/3100B/3100C/3100D, and the second layer 3720 includes objects 3100E/3100F/3100G/3100H. The layer divider 3600 is disposed on a top surface of the second layer 3720. The presence of the layer divider 3600 of FIG. 8 may be determined based on the methods and systems described above.

The above Detailed Description of examples of the disclosed technology is not intended to be exhaustive or to limit the disclosed technology to the precise form disclosed above. While specific examples for the disclosed technology are described above for illustrative purposes, various equivalent modifications are possible within the scope of the disclosed technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or sub-combinations. Each of these processes or blocks may be implemented in a variety of different ways. Further, while processes or blocks are at times shown as being performed in series, these processes or blocks may instead be performed or implemented in parallel, or may be performed at different times. Further, any specific numbers noted herein are only examples, alternative implementations may employ differing values or ranges.

These and other changes may be made to the disclosed technology in light of the above Detailed Description. While the Detailed Description describes certain examples of the disclosed technology as well as the best mode contemplated, the disclosed technology may be practiced in many ways, no matter how detailed the above description appears in text. Details of the system may vary considerably in its specific implementation, while still being encompassed by the technology disclosed herein. As noted above, particular terminology used when describing certain features or aspects of the disclosed technology should not be taken to imply that the terminology is being redefined herein to be restricted to any specific characteristics, features, or aspects of the disclosed technology with which that terminology is associated. Accordingly, the invention is not limited, except as by the appended claims. In general, the terms used in the following claims should not be construed to limit the disclosed technology to the specific examples disclosed in the specification, unless the above Detailed Description section explicitly defines such terms.

It will be apparent to one of ordinary skills in the relevant arts that other suitable modifications and adaptations to the methods and applications described herein may be made without departing from the scope of any of the embodiments. The embodiments described above are illustrative examples and it should not be construed that the present disclosure is limited to these particular embodiments. It should be understood that various embodiments disclosed herein may be combined in different combinations than the combinations specifically presented in the description and accompanying drawings. It should also be understood that, depending on the example, certain acts or events of any of the processes or methods described herein may be performed in a different sequence, may be added, merged, or left out altogether (e.g., all described acts or events may not be necessary to carry out the methods or processes). In addition, while certain features of embodiments hereof are described as being performed by a single component, module, or unit for purposes of clarity, it should be understood that the features and functions described herein may be performed by any combination of components, units, or modules. Thus, various changes and modifications may be affected by one skilled in the art without departing from the spirit or scope of the invention as defined in the appended claims.

Further embodiments include:
Embodiment 1. A computing system to detect a layer divider between a stack of objects, comprising: at least one camera; a control system configured to communicate with a robot having a robot arm that includes an end effector apparatus; and a processing circuit configured to: identify a contour of the stack of objects based on 3D image information obtained from at least one image captured by the at least one camera, identify a top surface of the stack of objects based on the contour of the stack of objects, detect extension lines, each corresponding to at least one of an edge of an object or a gap between objects of the stack of objects, extending from a perimeter of the top surface towards a center of the top surface based on 2D image information of the top surface of the stack of objects, detect a presence of the layer divider based on a length of each of the extension lines being less than a line-length threshold, identify a contour of the layer divider according to points on the top surface corresponding to termination points of the extension lines, and determine a trajectory to control a movement of the robot arm based on the contour of the layer divider.
Embodiment 2. The system of embodiment 1, wherein the termination points are distal to the perimeter of the top surface.
Embodiment 3. The system of embodiment 1, wherein the processing circuit is further configured to detect the extension lines on the top surface based on depth gradients between the objects detected in the 3D image information.
Embodiment 4. The system of embodiment 1, wherein the processing circuit is further configured to detect the presence of the layer divider based on the extension lines not extending from the perimeter of the top surface to the center of the top surface.
Embodiment 5. The system of embodiment 1, wherein the processing circuit is further configured to identify a contour of the layer divider based on removing portions of image information of the top surface of the stack of objects from the perimeter to the termination points of each of the extension lines.
Embodiment 6. The system of embodiment 1, wherein the processing circuit is further configured to: determine a surface area of the layer divider, in response to the presence of the layer divider being detected; and validate the presence of the layer divider, in response to the surface area being greater than a surface-area minimum threshold.
Embodiment 7. The system of embodiment 1, wherein the processing circuit is further configured to: determine a surface area of the layer divider, in response to the presence of the layer divider being detected; and validate the presence of the layer divider, in response to the surface area being less than a surface area maximum threshold.
Embodiment 8. The system of embodiment 1, wherein the processing circuit is further configured to: determine a smoothness of the layer divider based on change of depth information of adjacent pixels in the 3D image information corresponding to an upper surface of the layer divider, in response to the presence of the layer divider being detected; and validate the presence of the layer divider, in response to the smoothness being greater than a smoothness threshold.
Embodiment 9. The system of embodiment 1, wherein the processing circuit is further configured to: generate image features based on the 2D image information and the 3D image information corresponding to an upper surface of the layer divider; identify a texture artifact based on the image features; and determine the presence of the layer divider is a false positive, in response to the texture artifact being identified.
Embodiment 10. The system of embodiment 1, wherein the trajectory configures the robot to grasp and remove the layer divider.
Embodiment 11. The system of embodiment 1, wherein the line-length threshold is less than half a length of a smallest side of a quadrilateral defining the top surface.
Embodiment 12. The system of embodiment 1, wherein the line-length threshold is less than quarter of a length of a smallest side of a quadrilateral defining the top surface.
Embodiment 13. The system of embodiment 6, wherein the surface-area minimum threshold is equal to a surface area of a largest object in the stack of objects.
Embodiment 14. The system of embodiment 6, wherein the surface-area minimum threshold is equal to a surface area of a largest side of a largest object in the stack of obj ects.
Embodiment 15. The system of embodiment 7, wherein the surface area maximum threshold is equal to a surface area of a pallet on which the stack of objects is disposed.
Embodiment 16. The system of embodiment 1, wherein the processing circuit is further configured to: determine a thickness of the layer divider based on the 3D image information, in response to the presence of the layer divider being detected; and validate the presence of the layer divider, in response to the thickness being less than a thickness threshold.
Embodiment 17. The system of embodiment 1, wherein the processing circuit is further configured to: determine a weight of the layer divider, in response to the presence of the layer divider being detected; and validate the presence of the layer divider, in response to the weight being less than a weight threshold.
Embodiment 18. The system of embodiment 9, wherein the texture artifact comprises any one or any combination of a logo, a graphic, a tag, a label, a marking, a scan code, a Universal Product Code ("UPC"), packing tape, visual patterns, and a change in intensity.
Embodiment 19. The system of embodiment 1, wherein the processing circuit is further configured to perform morphological operations to sharpen the contour of the layer divider, wherein the morphological operations are based on a square structuring element having a length of a side equal to a length of a largest extension line of the extension lines.
Embodiment 20. The system of embodiment 1, wherein the morphological operations include a dilation operation based on sliding the structuring element over the layer divider and retaining a maximum pixel value covered by the structuring element.
Embodiment 21. The system of embodiment 1, wherein the morphological operations include an erosion operation based on sliding the structuring element over the layer divider and retaining a minimum pixel value covered by the structuring element.
Embodiment 22. The system of embodiment 1, wherein the morphological operations include performing the dilation operation followed by the erosion operation.
Embodiment 23. The system of embodiment 1, wherein the trajectory configures the robot arm to grasp and remove the layer divider from above the stack of the objects using the end effector apparatus.
Embodiment 24. The system of embodiment 1, wherein the trajectory configures a gripper of the end effector apparatus to grasp the layer divider according to at least one of a plurality of grasping models.
Embodiment 25. The system of embodiment 1, wherein the identifying of the top surface of the stack of objects includes: positioning the at least one camera towards the stack of objects; capturing a 2D image of a top view of the stack of objects based on the contour of the stack of objects; and determining the top surface of the stack of objects based on the 2D image.
Embodiment 26. A non-transitory computer-readable medium having instructions thereon that, when executed by a control circuit, configures the control circuit to: identify a contour of the stack of objects based on 3D image information obtained from at least one image captured by at least one camera, identify a top surface of the stack of objects based on the contour of the stack of objects, detect extension lines, each corresponding to at least one of an edge of an object or a gap between objects of the stack of objects, extending from a perimeter of the top surface towards a center of the top surface based on 2D image information of the top surface of the stack of objects, detect a presence of the layer divider based on a length of each of the extension lines being less than a line-length threshold, identify a contour of the layer divider according to points on the top surface corresponding to termination points of the extension lines, and determine a trajectory to control a movement of a robot arm of a robot based on the contour of the layer divider.
Embodiment 27. The non-transitory computer-readable medium of embodiment 26, wherein the termination points are distal to the perimeter of the top surface.
Embodiment 28. The non-transitory computer-readable medium of embodiment 26, wherein the control circuit is further configured to detect the extension lines on the top surface based on depth gradients between the objects detected in the 3D image information.
Embodiment 29. The non-transitory computer-readable medium of embodiment 26, wherein the control circuit is further configured to detect the presence of the layer divider based on the extension lines not extending from the perimeter of the top surface to the center of the top surface.
Embodiment 30. The non-transitory computer-readable medium of embodiment 26, wherein the control circuit is further configured to identify a contour of the layer divider based on removing portions of image information of the top surface of the stack of objects from the perimeter to the termination points of each of the extension lines.
Embodiment 31. A processor-implemented method for detecting a layer divider between a stack of objects, comprising: identifying a contour of the stack of objects based on 3D image information obtained from at least one image, identifying a top surface of the stack of objects based on the contour of the stack of objects, detecting extension lines, each corresponding to at least one of an edge of an object or a gap between objects of the stack of objects, extending from a perimeter of the top surface towards a center of the top surface based on 2D image information of the top surface of the stack of objects, detecting a presence of the layer divider based on a length of each of the extension lines being less than a line-length threshold, identifying a contour of the layer divider according to points on the top surface corresponding to termination points of the extension lines, and determining a trajectory to control a movement of a robot arm of a robot based on the contour of the layer divider.
Embodiment 32. The method of embodiment 31, wherein the termination points are distal to the perimeter of the top surface.
Embodiment 33. The method of embodiment 31, further comprising detecting the extension lines on the top surface based on depth gradients between the objects detected in the 3D image information.
Embodiment 34. The method of embodiment 31, further comprising detecting the presence of the layer divider based on the extension lines not extending from the perimeter of the top surface to the center of the top surface.
Embodiment 35. The method of embodiment 31, wherein the identifying of the contour of the layer divider comprises identifying the contour of the layer divider based on removing portions of image information of the top surface of the stack of objects from the perimeter to the termination points of each of the extension lines.

## Claims

1. A computing system to detect a layer divider between a stack of objects, comprising:
at least one camera;
a control system configured to communicate with a robot having a robot arm that includes an end effector apparatus; and
a processing circuit configured to:
identify a contour of the stack of objects based on 3D image information obtained from at least one image captured by the at least one camera,
identify a top surface of the stack of objects based on the contour of the stack of obj ects,
detect extension lines, each corresponding to at least one of an edge of an object or a gap between objects of the stack of objects, extending from a perimeter of the top surface towards a center of the top surface based on 2D image information of the top surface of the stack of objects,
detect a presence of the layer divider based on a length of each of the extension lines being less than a line-length threshold,
identify a contour of the layer divider according to points on the top surface corresponding to termination points of the extension lines, and
determine a trajectory to control a movement of the robot arm based on the contour of the layer divider.

2. The system of claim 1, wherein the termination points are distal to the perimeter of the top surface.

3. The system of claim 1, wherein the processing circuit is further configured to detect the extension lines on the top surface based on depth gradients between the objects detected in the 3D image information;
or
wherein the processing circuit is further configured to detect the presence of the layer divider based on the extension lines not extending from the perimeter of the top surface to the center of the top surface,
or
wherein the processing circuit is further configured to identify a contour of the layer divider based on removing portions of image information of the top surface of the stack of objects from the perimeter to the termination points of each of the extension lines.

4. The system of claim 1, wherein the processing circuit is further configured to:
determine a surface area of the layer divider, in response to the presence of the layer divider being detected; and
validate the presence of the layer divider, in response to the surface area being greater than a surface-area minimum threshold;
or
wherein the processing circuit is further configured to:
determine a surface area of the layer divider, in response to the presence of the layer divider being detected; and
validate the presence of the layer divider, in response to the surface area being less than a surface area maximum threshold.

5. The system of claim 1, wherein the processing circuit is further configured to:
determine a smoothness of the layer divider based on change of depth information of adjacent pixels in the 3D image information corresponding to an upper surface of the layer divider, in response to the presence of the layer divider being detected; and
validate the presence of the layer divider, in response to the smoothness being greater than a smoothness threshold.

6. The system of claim 1, wherein the processing circuit is further configured to:
generate image features based on the 2D image information and the 3D image information corresponding to an upper surface of the layer divider;
identify a texture artifact based on the image features; and
determine the presence of the layer divider is a false positive, in response to the texture artifact being identified.

7. The system of claim 1, wherein the trajectory configures the robot to grasp and remove the layer divider.

8. A non-transitory computer-readable medium having instructions thereon that, when executed by a control circuit, configures the control circuit to:
identify a contour of the stack of objects based on 3D image information obtained from at least one image captured by at least one camera,
identify a top surface of the stack of objects based on the contour of the stack of obj ects,
detect extension lines, each corresponding to at least one of an edge of an object or a gap between objects of the stack of obj ects, extending from a perimeter of the top surface towards a center of the top surface based on 2D image information of the top surface of the stack of objects,
detect a presence of the layer divider based on a length of each of the extension lines being less than a line-length threshold,
identify a contour of the layer divider according to points on the top surface corresponding to termination points of the extension lines, and
determine a trajectory to control a movement of a robot arm of a robot based on the contour of the layer divider.

9. The non-transitory computer-readable medium of claim 8, wherein the termination points are distal to the perimeter of the top surface.

10. The non-transitory computer-readable medium of claim 8, wherein the control circuit is further configured to detect the extension lines on the top surface based on depth gradients between the objects detected in the 3D image information;
or
wherein the control circuit is further configured to detect the presence of the layer divider based on the extension lines not extending from the perimeter of the top surface to the center of the top surface.

11. The non-transitory computer-readable medium of claim 8, wherein the control circuit is further configured to identify a contour of the layer divider based on removing portions of image information of the top surface of the stack of objects from the perimeter to the termination points of each of the extension lines.

12. A processor-implemented method for detecting a layer divider between a stack of objects, comprising:
identifying a contour of the stack of objects based on 3D image information obtained from at least one image,
identifying a top surface of the stack of objects based on the contour of the stack of objects,
detecting extension lines, each corresponding to at least one of an edge of an object or a gap between objects of the stack of obj ects, extending from a perimeter of the top surface towards a center of the top surface based on 2D image information of the top surface of the stack of objects,
detecting a presence of the layer divider based on a length of each of the extension lines being less than a line-length threshold,
identifying a contour of the layer divider according to points on the top surface corresponding to termination points of the extension lines, and
determining a trajectory to control a movement of a robot arm of a robot based on the contour of the layer divider.

13. The method of claim 12, wherein the termination points are distal to the perimeter of the top surface.

14. The method of claim 12, further comprising detecting the extension lines on the top surface based on depth gradients between the objects detected in the 3D image information;
or
further comprising detecting the presence of the layer divider based on the extension lines not extending from the perimeter of the top surface to the center of the top surface.

15. The method of claim 12, wherein the identifying of the contour of the layer divider comprises identifying the contour of the layer divider based on removing portions of image information of the top surface of the stack of objects from the perimeter to the termination points of each of the extension lines.
